# EUROPEAN PATENT APPLICATION

(11) **EP 4 790 972 A1**
(43) Date of publication of application: **12.08.2026**
(21) Application number: 24941559.7
(22) Date of filing: 16.12.2024
(51) Int. Cl.: H04M 1/02

(54) **PROTECTIVE CASE FOR FOLDABLE ELECTRONIC DEVICE AND FOLDABLE ELECTRONIC DEVICE ASSEMBLY**

(30) Priority: 31.05.2024 CN 202410706571; 25.07.2024 CN 202411014989
(71) Applicant: HUAWEI TECHNOLOGIES CO., LTD., Shenzhen 518129 (CN)
(72) Inventor: ZHOU, Hao, Shenzhen, Guangdong 518129 (CN); ZHAO, Qiansheng, Shenzhen, Guangdong 518129 (CN); WANG, Zihao, Shenzhen, Guangdong 518129 (CN); WANG, Shaohan, Shenzhen, Guangdong 518129 (CN)
(74) Representative: Maiwald GmbH
(86) International application number: PCT/CN2024/139742
(87) International publication number: WO 2025/246291

(57) **Abstract**

Embodiments of this application provide a foldable electronic device protection housing and a foldable electronic device assembly, and relate to the technical field of foldable electronic device protection housings. The foldable electronic device protection housing is used in a foldable electronic device. The foldable electronic device includes a housing and a flexible display, and the flexible display is connected to the housing. The housing includes a first housing and a second housing. When the first housing and the second housing are folded relative to each other, a flexible display in an outward-folding area is exposed from the first housing and the second housing. The foldable electronic device protection housing includes a protection housing body and a flexible display protection structure. The protection housing body is clamped to the housing of the foldable electronic device. The flexible display protection structure is connected to the protection housing body. The flexible display protection structure includes a protection portion, and when the first housing and the second housing are folded relative to each other, the protection portion is attached to at least a part of the flexible display in the outward-folding area. In this way, the protection portion can protect at least a part of the flexible display in the outward-folding area, thereby reducing a risk of damage to the flexible display.

## Description

This application claims priorities to two Chinese Patent Applications No. 202410706571.0, filed with the China National Intellectual Property Administration on May 31, 2024 and entitled "FOLDABLE ELECTRONIC DEVICE PROTECTION HOUSING AND FOLDABLE ELECTRONIC DEVICE ASSEMBLY" and No. 202411014989.1, filed with the China National Intellectual Property Administration on July 25, 2024 and entitled "FOLDABLE ELECTRONIC DEVICE PROTECTION HOUSING AND FOLDABLE ELECTRONIC DEVICE ASSEMBLY", both of which are incorporated herein by reference in their entireties.

### TECHNICAL FIELD

Embodiments of this application provide a foldable electronic device protection housing and a foldable electronic device assembly, and relate to the technical field of foldable electronic device protection housings.

### BACKGROUND

A foldable electronic device includes a first housing and a second housing. The first housing and the second housing may be folded relative to each other away from a flexible display, or the first housing and the second housing may be unfolded relative to each other. For example, a folding manner of the first housing and the second housing may be referred to as "outward folding".

When the first housing and the second housing are folded relative to each other, a flexible display in an outward-folding area is exposed from the first housing and the second housing, which increases a risk of damage to the flexible display in the outward-folding area.

### SUMMARY

Embodiments of this application provide a foldable electronic device protection housing and a foldable electronic device assembly, to reduce a risk of damage to a flexible display.

According to an aspect, an embodiment of this application provides a foldable electronic device protection housing. The foldable electronic device protection housing is used in a foldable electronic device. The foldable electronic device includes a housing and a flexible display, and the flexible display is connected to the housing. The housing includes a first housing and a second housing, and the first housing is rotatably connected to the second housing by using a first hinge. The first housing and the second housing are folded relative to each other away from the flexible display, or the first housing and the second housing are unfolded relative to each other. When the first housing and the second housing are folded relative to each other, a flexible display in an outward-folding area is exposed from the first housing and the second housing. The foldable electronic device protection housing includes a protection housing body and a flexible display protection structure. The protection housing body is clamped to the housing of the foldable electronic device. The flexible display protection structure is connected to the protection housing body. The flexible display protection structure includes a protection portion, and when the first housing and the second housing are folded relative to each other, the protection portion is attached to at least a part of the flexible display in the outward-folding area.

In this embodiment of this application, the protection housing body is disposed to be clamped to the housing of the foldable electronic device, so that the foldable electronic device protection housing can be connected to the foldable electronic device. In addition, the foldable electronic device protection housing is connected to the foldable electronic device through clamping, so that convenience of assembling and disassembling the two can be improved.

When the first housing and the second housing are folded relative to each other, the protection portion is attached to at least a part of the flexible display in the outward-folding area, so that the protection portion can protect at least a part of the flexible display in the outward-folding area, thereby reducing a risk of damage to the flexible display in the outward-folding area.

In some possible implementations, the protection portion includes a first magnetic attraction member, and when the first housing and the second housing are folded relative to each other, the first magnetic attraction member is attracted to the first hinge. In this way, convenience of attaching the protection portion to the flexible display in the outward-folding area and separating the protection portion from the flexible display in the outward-folding area is improved, thereby improving use convenience of the foldable electronic device protection housing.

In some possible implementations, the protection structure includes a support plate, an accommodation hole is provided on the support plate, and the first magnetic attraction member is embedded in the accommodation hole. In this way, the support plate can support and protect the first magnetic attraction member, thereby reducing a risk of breaking the first magnetic attraction member, and improving use reliability of the foldable electronic device protection housing.

In some possible implementations, there are a plurality of first magnetic attraction members, and at least two of the plurality of first magnetic attraction members are spaced apart in an extension direction of the support plate. In this way, the plurality of first magnetic attraction members can be attracted to different positions of the first hinge in the extension direction (for example, a second direction) of the support plate, so that the protection portion can be attached to different positions of the flexible display in the outward-folding area in the extension direction (for example, the second direction) of the support plate, thereby improving a protection effect of the protection portion on the flexible display in the outward-folding area, and reducing a risk of damage to the flexible display in the outward-folding area.

In some possible implementations, the support plate includes an injection molding member and a metal sheet, and the injection molding member and the metal sheet are formed through injection molding. In this way, mechanical strength of the support plate can be improved, a protection effect of the support plate on the first magnetic attraction member can be improved, a risk of breaking the first magnetic attraction member can be reduced, and use reliability of the foldable electronic device protection housing can be improved. In addition, the injection molding member and the metal sheet are disposed to be formed through injection molding, so that reliability of a connection between the two can be improved.

In some possible implementations, the metal sheet includes a metal sheet body and a metal connection portion, and the metal sheet body is connected to the metal connection portion. The metal connection portion is embedded in the injection molding member. When the protection portion is attached to at least a part of the flexible display in the outward-folding area, the metal sheet body is closer to the flexible display than the first magnetic attraction member. In this way, the metal sheet body can isolate the first magnetic attraction member from the flexible display in the outward-folding area, to reduce a risk that is of damage to the flexible display in the outward-folding area or the first magnetic attraction member and that is caused by the first magnetic attraction member colliding with the flexible display in the outward-folding area when the protection portion is attached to the flexible display in the outward-folding area, thereby improving use reliability of the foldable electronic device protection housing.

In some possible implementations, the metal sheet body includes a non-magnetic material. In this way, impact caused by the metal sheet body on magnetic attraction between the first magnetic attraction member and the first hinge can be reduced, and reliability of magnetic attraction between the protection portion and at least a part of the flexible display in the outward-folding area can be improved, thereby improving use reliability of the foldable electronic device protection housing.

In some possible implementations, the injection molding member includes an injection molding member body and an injection molding connection portion, and the injection molding member body is connected to the injection molding connection portion. The accommodation hole is provided on the injection molding member body. A first button through hole is provided on the injection molding connection portion, and the first button through hole penetrates the injection molding connection portion in a thickness direction of the injection molding connection portion. When the protection portion is attached to at least a part of the flexible display in the outward-folding area, the first button through hole exposes a button of the foldable electronic device. In this way, impact caused by the foldable electronic device protection housing on the foldable electronic device can be reduced.

In some possible implementations, the protection structure further includes a first cover portion, and the first cover portion is located on a side that is of the first magnetic attraction member and that is away from the metal sheet, and seals an opening of the accommodation hole. In this way, the first cover portion can cover a mark of the first magnetic attraction member, thereby reducing impact caused by the first magnetic attraction member on an appearance of the protection portion, and improving surface smoothness of an external surface (a surface on a side that is away from the flexible display when the protection portion is attached to the flexible display) of the protection portion.

In some possible implementations, a material of the first cover portion includes polycarbonate. In this way, a weight of the first cover portion can be reduced, thereby reducing a weight of the foldable electronic device protection housing.

In some possible implementations, when the first housing and the second housing are folded relative to each other, the protection portion is clamped to at least a part of the flexible display in the outward-folding area. In this way, the protection portion can be attached to at least a part of the flexible display in the outward-folding area, to protect at least a part of the flexible display in the outward-folding area. In addition, through clamping, compared with magnetic attraction between the protection portion and the flexible display in the outward-folding area, no magnetic attraction member needs to be disposed, so that a structure of the protection portion can be simplified, and costs of the foldable electronic device protection housing can be reduced.

In some possible implementations, the flexible display protection structure further includes a clamping portion, and the clamping portion is located on a side of the protection portion in an extension direction of the protection portion and is connected to the protection portion. When the protection portion is attached to at least a part of the flexible display in the outward-folding area, the clamping portion is clamped to an end portion of the first hinge. In this way, reliability of attachment between the protection portion and the flexible display in the outward-folding area is improved, thereby improving use reliability of the foldable electronic device protection housing.

In some possible implementations, there are two clamping portions, and the two clamping portions are located on two sides of the protection portion in the extension direction of the protection portion and are separately connected to the protection portion. In this way, the two clamping portions can separately be clamped to two ends of the first hinge, thereby improving use reliability of the foldable electronic device protection housing.

In some possible implementations, when the clamping portion is clamped to the end portion of the first hinge, the clamping portion protrudes from the flexible display in the outward-folding area in a thickness direction of the protection housing body. In this way, when the foldable electronic device falls off or is hit, the clamping portion can collide with a foreign matter before the flexible display in the outward-folding area and a flexible display connected to the first housing, thereby reducing a risk of damage to the flexible display in the outward-folding area and the flexible display connected to the first housing because the flexible display in the outward-folding area and the flexible display connected to the first housing directly collide with the foreign matter.

In some possible implementations, the housing further includes a third housing, and the third housing is rotatably connected to the second housing. The third housing and the second housing are folded relative to each other and toward the flexible display; or the third housing and the second housing are unfolded relative to each other. The protection housing body is clamped to the third housing. It may be understood that the second housing and the third housing are folded relative to each other and toward the flexible display, so that when the second housing and the third housing are folded relative to each other, the flexible display is not exposed from the third housing. Therefore, the protection housing body is clamped to the third housing, so that the protection housing body can be prevented from blocking the flexible display, and impact caused by the foldable electronic device protection housing on the foldable electronic device can be reduced.

In some possible implementations, the protection housing body has a first edge and a second edge that are disposed relative to each other in a first direction. When the first housing and the second housing are folded relative to each other, and the second housing and the third housing are folded relative to each other, the first edge is closer to the flexible display in the outward-folding area than the second edge. The flexible display protection structure is connected to at least one of the first edge and the second edge. In this way, flexibility of a connection between the flexible display protection structure and the protection housing body can be improved.

In some possible implementations, the flexible display protection structure further includes a window portion. When the first housing and the second housing are folded relative to each other, and the second housing and the third housing are folded relative to each other, the window portion covers at least a part of the flexible display connected to the first housing. The window portion includes a transparent material. The window portion is connected to the second edge, and the protection portion is connected to the first edge; or the protection portion is connected to the window portion. The window portion is disposed to cover at least a part of the flexible display connected to the first housing, so that the window portion can protect the flexible display connected to the first housing. In addition, the window portion includes a transparent material, so that a user can observe, by using the window portion, information displayed on the part that is of the flexible display and that is covered by the window portion, thereby reducing impact caused by the foldable electronic device protection housing on the foldable electronic device. The protection portion is connected to the first edge or the window portion, so that flexibility of disposing the protection portion can be improved.

In some possible implementations, the flexible display protection structure includes a first connection portion, and the first connection portion is connected to the protection housing body and the protection portion. In this way, the protection portion can be connected to the protection housing body by using the first connection portion.

In some possible implementations, the first connection portion includes a flexible material. In this way, the first connection portion can be freely bent, so that relative positions of the protection housing body and the protection portion can be relatively flexible, use flexibility of the foldable electronic device protection housing is improved, and impact of the foldable electronic device protection housing on the foldable electronic device is reduced.

In some possible implementations, a material of the first connection portion includes leather. In this way, reliability of the first connection portion can be improved, thereby improving reliability of a connection between the protection housing body and the protection portion.

In some possible implementations, the foldable electronic device protection housing further includes a second magnetic attraction member, and the second magnetic attraction member is connected to the window portion. The second magnetic attraction member is attracted to the third magnetic attraction member of the foldable electronic device. In this way, when the window portion covers at least a part of the flexible display connected to the first housing, the window portion can be fixed relative to the flexible display connected to the first housing, thereby reducing a risk of shaking between the two, and improving a protection effect of the window portion on the flexible display connected to the first housing. In addition, the window portion can be fixed relative to the foldable electronic device, and is not in a free swinging state, thereby reducing impact caused by the window portion on the foldable electronic device, and improving user experience.

In some possible implementations, the flexible display protection structure further includes a buffering portion, and the buffering portion is connected to the protection portion. When the protection portion is attached to at least a part of the flexible display in the outward-folding area, the buffering portion is located between the flexible display in the outward-folding area and the protection portion. In this way, impact caused by the protection portion on the flexible display in the outward-folding area when the protection portion is attached to the flexible display in the outward-folding area can be buffered, and a risk of damage to the flexible display in the outward-folding area can be reduced.

In addition, an embodiment of this application provides a foldable electronic device assembly. The foldable electronic device assembly includes a foldable electronic device and the foregoing foldable electronic device protection housing. The foldable electronic device includes a housing and a flexible display, and the flexible display is connected to the housing. The housing includes a first housing and a second housing, and the first housing is rotatably connected to the second housing by using a first hinge. The first housing and the second housing are folded relative to each other away from the flexible display, or the first housing and the second housing are unfolded relative to each other. When the first housing and the second housing are folded relative to each other, a flexible display in an outward-folding area is exposed from the first housing and the second housing. The protection housing body of the foldable electronic device protection housing is clamped to the housing. When the first housing and the second housing are folded relative to each other, a protection portion of the foldable electronic device protection housing is attached to at least a part of the flexible display in the outward-folding area.

The foldable electronic device assembly provided in this embodiment of this application includes the foregoing foldable electronic device protection housing. Therefore, all the foregoing beneficial effects are achieved. Details are not described herein again.

### BRIEF DESCRIPTION OF DRAWINGS

FIG. 1 is a diagram of a structure of a foldable electronic device according to some embodiments of this application;
FIG. 2 is a diagram of a structure of a foldable electronic device protection housing according to some embodiments of this application;
FIG. 3 is an exploded view of a structure of the foldable electronic device protection housing in FIG. 2 in some embodiments;
FIG. 4 is a diagram of a structure of a foldable electronic device protection housing according to some other embodiments of this application;
FIG. 5 is an exploded view of a structure of the foldable electronic device protection housing in FIG. 4 in some embodiments;
FIG. 6 is a diagram of a structure of a foldable electronic device assembly according to some embodiments of this application;
FIG. 7 is a diagram of a structure of a foldable electronic device assembly according to some other embodiments of this application;
FIG. 8 is a diagram of a structure of a flexible display protection structure according to some embodiments of this application;
FIG. 9 is an exploded view of a structure of the foldable electronic device protection housing in FIG. 2 in some other embodiments;
FIG. 10 is a cross-sectional view of the foldable electronic device protection housing in FIG. 2 in an A-A direction in some embodiments;
FIG. 11 is a partially enlarged view of an area G1 in FIG. 10;
FIG. 12 is a diagram of structures of a magnetic attraction member and a support plate according to some embodiments of this application;
FIG. 13 is a cross-sectional view of the magnetic attraction member and the support plate in FIG. 12 in a C-C direction in some embodiments;
FIG. 14 is a diagram of a structure of an injection molding member according to some embodiments of this application;
FIG. 15 is a cross-sectional view of the injection molding member in FIG. 14 in a D-D direction in some embodiments;
FIG. 16 is a diagram of a structure of a support plate according to some embodiments of this application;
FIG. 17 is a diagram of a position relationship between an injection molding member and a first cover portion according to some embodiments of this application;
FIG. 18 is a diagram of a structure of a foldable electronic device protection housing according to still some other embodiments of this application;
FIG. 19 is an exploded view of a structure in FIG. 18 in some embodiments;
FIG. 20 is a diagram of a structure of a foldable electronic device protection housing according to still some other embodiments of this application;
FIG. 21 is an exploded view of a structure in FIG. 20 in some embodiments;
FIG. 22 is a diagram of a structure of an injection molding member according to some embodiments of this application;
FIG. 23 is a diagram of a structure of an appearance member of a first hinge according to some embodiments of this application;
FIG. 24 is a diagram of a cooperation relationship between a protection structure and an appearance member according to some embodiments of this application;
FIG. 25 is a diagram of a structure of a protection housing body according to some embodiments of this application;
FIG. 26 is a diagram of a structure of a foldable electronic device protection housing according to still some other embodiments of this application;
FIG. 27 is a diagram of a structure of a foldable electronic device assembly according to still some other embodiments of this application;
FIG. 28 is an exploded view of a structure of the foldable electronic device protection housing in FIG. 20 in some other embodiments;
FIG. 29 is an exploded view of a structure of the foldable electronic device protection housing in FIG. 4 in some other embodiments;
FIG. 30 is a cross-sectional view of the foldable electronic device protection housing in FIG. 4 in a B-B direction in some embodiments;
FIG. 31 is a diagram of a structure of a foldable electronic device protection housing according to still some other embodiments of this application;
FIG. 32 is a diagram of a structure of a window portion according to some embodiments of this application;
FIG. 33 is a diagram of a structure of a foldable electronic device assembly according to still some other embodiments of this application; and
FIG. 34 is a diagram of a structure of a foldable electronic device assembly according to still some other embodiments of this application.

### DESCRIPTION OF EMBODIMENTS

The following clearly and completely describes technical solutions in some embodiments of this application with reference to the accompanying drawings. It is clear that the described embodiments are merely some rather than all embodiments of this application. All other embodiments obtained by a person of ordinary skill in the art based on embodiments provided in this application shall fall within the protection scope of this application.

Unless otherwise required in the context, throughout the entire specification and claims, the term "include" is interpreted as "being open and inclusive", that is, "include but not limited to". In the descriptions of this specification, terms such as "an embodiment", "some embodiments", "example embodiments", "examples", "particular example", or "some examples" are intended to indicate that a specific feature, a structure, a material, or a characteristic related to the embodiment or example is included in at least one embodiment or example of this application. The foregoing schematic representations of the terms do not necessarily refer to a same embodiment or example. Further, the particular feature, structure, material, or characteristic may be included in any one or more embodiments or examples in any appropriate manner.

The terms "first" and "second" mentioned below are merely intended for a purpose of description, and shall not be understood as an indication or implication of relative importance or implicit indication of the number of indicated technical features. Therefore, a feature limited by "first" or "second" may explicitly or implicitly include one or more features. In the descriptions of embodiments of this application, unless otherwise specified, "a plurality of" means two or more than two.

As used herein, "perpendicular to" and "parallel" include described cases and cases approximate to the described cases. A range of the approximate case is in an acceptable deviation range. The acceptable deviation range is determined by a person of ordinary skill in the art by considering an error (namely, a limitation of a measurement system) related to measurement being discussed and measurement of a specific quantity. For example, "perpendicular to " includes absolute perpendicularity and approximate perpendicularity, where an acceptable deviation range of approximate perpendicularity may be 5%.

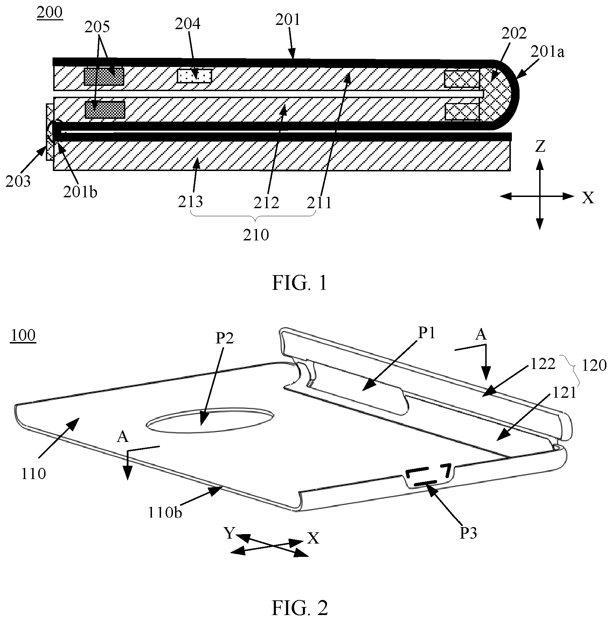

FIG. 1 is a diagram of a structure of a foldable electronic device according to some embodiments of this application. It may be understood that, in accompanying drawings of the specification of this application, FIG. 1 is used as an example. To clearly show a structure of the accompanying drawing, a gap is shown between a flexible display 201 connected to a second housing 212 and a flexible display 201 connected to a third housing 213. This does not mean that the two flexible displays 201 are spaced apart.

In some examples, as shown in FIG. 1, the foldable electronic device 200 includes a housing 210 and the flexible display 201, and the flexible display 201 is connected to the housing 210.

For example, a substrate of the flexible display 201 is a flexible material, so that the flexible display 201 has a bendable characteristic. For example, a material of the substrate of the flexible display 201 may be polyethylene terephthalate (polyethylene terephthalate, PET), or the substrate of the flexible display 201 may be another flexible material.

It may be understood that the flexible display 201 can display image information. For example, the flexible display 201 may be a liquid crystal display (liquid crystal display, LCD), an organic light-emitting diode (organic light-emitting diode, OLED) display, an active matrix organic light-emitting diode (active matrix organic light-emitting diode, AMOLED) display, a flexible light-emitting diode (flexible light-emitting diode, FLED) display, a sub-millimeter light-emitting diode display (English: Mini LED), a micro light-emitting diode display (English: Micro LED), a quantum dot light-emitting diode (quantum dot light emitting-diode, QLED) display, or the like. Alternatively, the flexible display 201 may be a display of another type.

The flexible display 201 is connected to the housing 210, so that the housing 210 can support and protect the flexible display 201, thereby reducing a risk of damage to the flexible display 201. For example, the housing 210 may be connected to the flexible display 201 through bonding. Alternatively, the housing 210 may be connected to the flexible display 201 in another manner.

In some examples, as shown in FIG. 1, the housing 210 may include a first housing 211 and a second housing 212, and the first housing 211 is rotatably connected to the second housing 212 by using a first hinge 202. The first housing 211 and the second housing 212 are folded relative to each other away from the flexible display 201, or the first housing 211 and the second housing 212 are unfolded relative to each other.

For example, when the first housing 211 and the second housing 212 are folded relative to each other, an included angle between the first housing 211 and the second housing 212 is approximately 0°. For example, the included angle between the first housing 211 and the second housing 212 may be 0.5°, 1°, 2°, or 3°. When the first housing 211 and the second housing 212 are unfolded relative to each other, the first housing 211 and the second housing 212 are arranged in a first direction X. In this case, an included angle between the first housing 211 and the second housing 212 is approximately 180°. For example, the included angle between the first housing 211 and the second housing 212 may be 178°, 179°, 181°, or 182°.

In some examples, as shown in FIG. 1, the housing 210 further includes a third housing 213, and the third housing 213 is rotatably connected to the second housing 212. The third housing 213 and the second housing 212 are folded relative to each other and toward the flexible display 201; or the third housing 213 and the second housing 212 are unfolded relative to each other.

For example, as shown in FIG. 1, the second housing 212 may be rotatably connected to the third housing 213 by using a second hinge 203, so that the second housing 212 and the third housing 213 can be folded or unfolded relative to each other by using the second hinge 203.

When the third housing 213 and the second housing 212 are folded relative to each other, an included angle between the third housing 213 and the second housing 212 is approximately 0°. For example, the included angle between the third housing 213 and the second housing 212 may be 0.5°, 1°, 2°, or 3°. When the third housing 213 and the second housing 212 are unfolded relative to each other, the third housing 213 and the second housing 212 are arranged in a first direction X. In this case, an included angle between the third housing 213 and the second housing 212 is approximately 180°. For example, the included angle between the third housing 213 and the second housing 212 may be 178°, 179°, 181°, or 182°.

It may be understood that the flexible display 201 has a bendable area and a non-bendable area. When the first housing 211 and the second housing 212 are folded relative to each other, and the second housing 212 and the third housing 213 are folded relative to each other, the flexible display 201 in the bendable area is in a bent state, and the flexible display 201 in the non-bendable area is not bent. For example, the flexible display 201 in the bendable area may be connected to a hinge (for example, the first hinge 202 and the second hinge 203), and the flexible display 201 in the non-bendable area may be connected to the housing 210 (for example, the first housing 211, the second housing 212, and the third housing 213).

As shown in FIG. 1, the first housing 211 and the second housing 212 are folded relative to each other away from the flexible display 201, so that when the first housing 211 and the second housing 212 are folded relative to each other, a part of the flexible display 201 (the flexible display 201 connected to the first hinge 202) in the bendable area can be exposed from the first housing 211 and the second housing 212. The second housing 212 and the third housing 213 are folded relative to each other toward the flexible display 201, so that when the second housing 212 and the third housing 213 are folded relative to each other, the other part of the flexible display 201 (the flexible display 201 connected to the second hinge 203) in the bendable area is not exposed from the second housing 212 and the third housing 213.

For example, a manner in which the first housing 211 and the second housing 212 are folded relative to each other may be referred to as "outward-folding", and a manner in which the second housing 212 and the third housing 213 are folded is referred to as "inward-folding". The part, of the flexible display 201 in the bendable area, that is exposed from the first housing 211 and the second housing 212 is referred to as a flexible display 201a in the outward-folding area, and the other part, of the flexible display 201 in the bendable area, that is not exposed from the second housing 212 and the third housing 213 is referred to as a flexible display 201b in an inward-folding area.

In other words, the flexible display 201 in the bendable area includes the flexible display 201a in the outward-folding area and the flexible display 201b in the inward-folding area. When the first housing 211 and the second housing 212 are folded relative to each other, the flexible display 201a in the outward-folding area is exposed from the first housing 211 and the second housing 212. When the second housing 212 and the third housing 213 are folded relative to each other, the flexible display 201b in the inward-folding area is not exposed from the second housing 212 and the third housing 213.

When the housing 210 includes the first housing 211, the second housing 212, and the third housing 213, the foldable electronic device 200 can be folded into three folds. It may be understood that the housing 210 may further include a fourth housing, a fifth housing, a sixth housing, and the like (not shown in the figure). In this case, the foldable electronic device 200 can be folded into more folds. In this embodiment of this application, an example in which the foldable electronic device 200 includes the first housing 211, the second housing 212, and the third housing 213 is used for further description.

It may be understood that, when the first housing 211 and the second housing 212 are folded relative to each other, and the third housing 213 and the second housing 212 are folded relative to each other, the foldable electronic device 200 is in a folded form (with reference to FIG. 1). When the first housing 211 and the second housing 212 are unfolded relative to each other, and the third housing 213 and the second housing 212 are unfolded relative to each other, the foldable electronic device 200 is in an unfolded form. When the first housing 211 and the second housing 212 are in a state of being unfolded relative to each other, and the second housing 212 and the third housing 213 are in a state of being folded relative to each other, the foldable electronic device 200 is in a semi-unfolded and semi-folded form.

In some examples, as shown in FIG. 1, the foldable electronic device 200 may include at least two third magnetic attraction members 205, and the at least two third magnetic attraction members 205 are respectively disposed in the first housing 211 and the second housing 212. When the first housing 211 and the second housing 212 are folded relative to each other, the third magnetic attraction member 205 located in the first housing 211 and the third magnetic attraction member 205 located in the second housing 212 may be attracted, to fasten the first housing 211 and the second housing 212 relative to each other, thereby reducing a risk of shaking between the first housing 211 and the second housing 212 when the first housing 211 and the second housing 212 are folded relative to each other, and improving use reliability of the foldable electronic device 200. For example, the third magnetic attraction member 205 may be a magnet.

In some examples, the third magnetic attraction member 205 may alternatively be disposed in the third housing 213, so that the third housing 213 can be attracted to the first housing 211 or the second housing 212.

For example, as shown in FIG. 1, the foldable electronic device 200 may further include a speaker 204, and the speaker 204 is located in the housing 210. For example, the speaker 204 may be located in the first housing 211. Alternatively, the speaker 204 may be located in the second housing 212 or the third housing 213. In some examples, there may be a plurality of speakers 204, and the plurality of speakers 204 may be disposed in at least one or at least two of the first housing 211, the second housing 212, and the third housing 213. A position at which the speaker 204 is disposed is not further limited in this embodiment of this application.

As shown in FIG. 1, when the first housing 211 and the second housing 212 are folded relative to each other, the flexible display 201a in the outward-folding area is exposed from the first housing 211 and the second housing 212, which increases a risk of damage to the flexible display 201a in the outward-folding area. In addition, to make the flexible display 201 easier to bend, a thickness of the flexible display 201 in the bendable area (for example, the flexible display 201a in the outward-folding area) is usually less than a thickness of the flexible display 201 in the non-bendable area, thereby further increasing a risk of damage to the flexible display 201a in the outward-folding area.

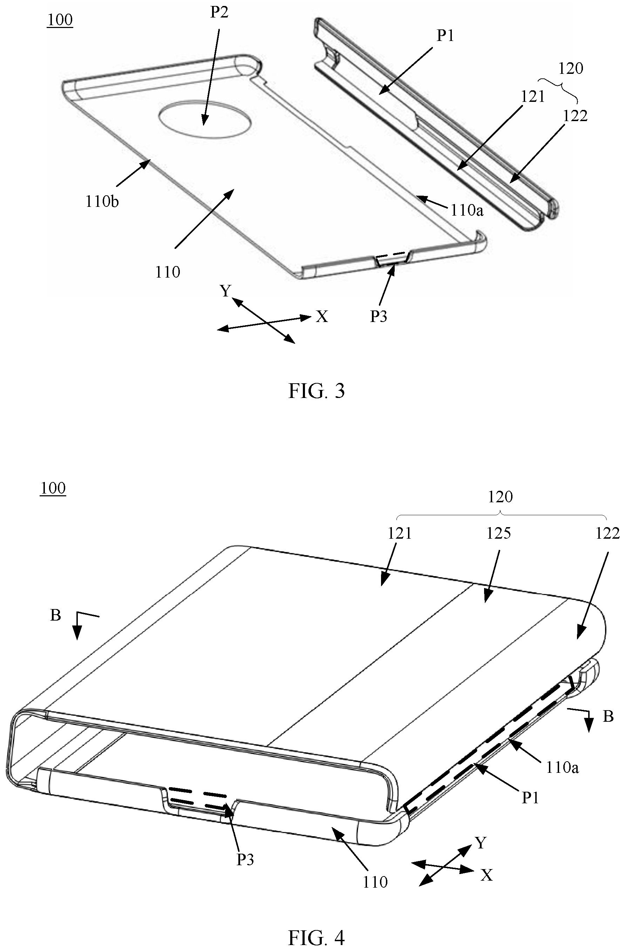

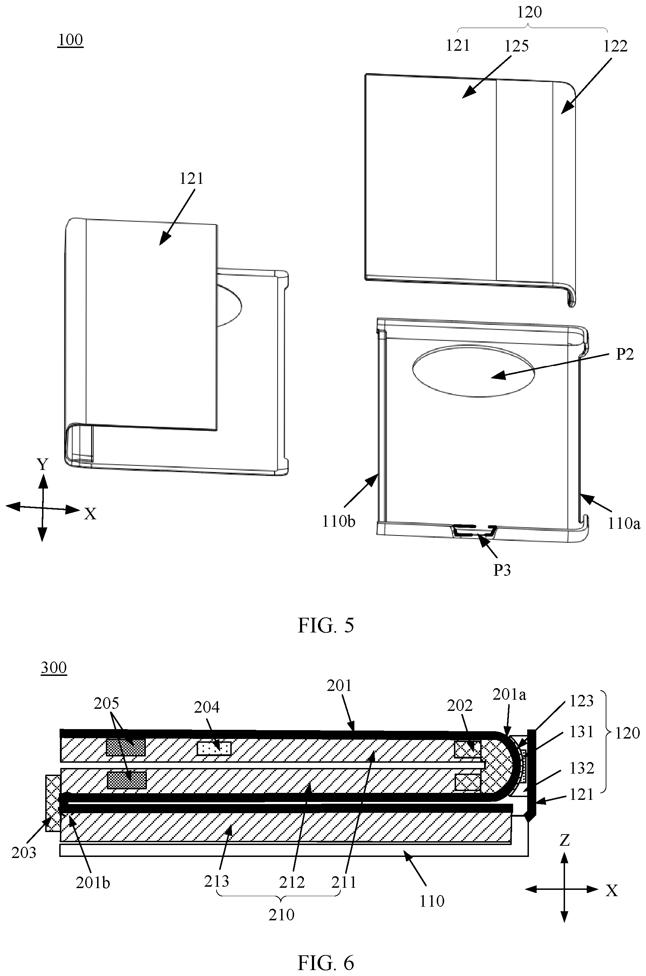

FIG. 2 is a diagram of a structure of a foldable electronic device protection housing according to some embodiments of this application. FIG. 3 is an exploded view of a structure of the foldable electronic device protection housing in FIG. 2 in some embodiments. FIG. 4 is a diagram of a structure of a foldable electronic device protection housing according to some other embodiments of this application. FIG. 5 is an exploded view of a structure of the foldable electronic device protection housing in FIG. 4 in some embodiments.

Based on this, as shown in FIG. 2, FIG. 3, FIG. 4, and FIG. 5, an embodiment of this application provides a foldable electronic device protection housing 100. The foldable electronic device protection housing 100 is used in a foldable electronic device 200. The foldable electronic device protection housing 100 includes a protection housing body 110 and a flexible display protection structure 120. The protection housing body 110 is clamped to a housing 210 of the foldable electronic device 200. The flexible display protection structure 120 is connected to the protection housing body 110.

For example, the protection housing body 110 may be clamped to at least one of a first housing 211, a second housing 212, and a third housing 213, so that the foldable electronic device protection housing 100 can be connected to the foldable electronic device 200. The foldable electronic device protection housing 100 is connected to the foldable electronic device 200 through clamping, so that convenience of assembling and disassembling the two can be improved.

The flexible display protection structure 120 may be directly connected to the protection housing body 110, or may be indirectly connected to the protection housing body 110 by using another component (for example, a first connection portion 121 and a window portion 125).

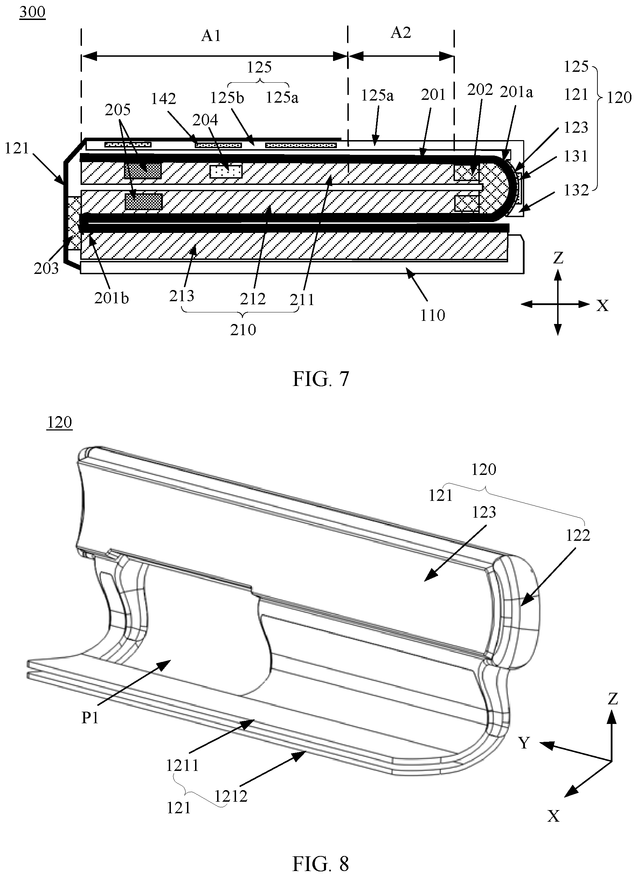

FIG. 6 is a diagram of a structure of a foldable electronic device assembly according to some embodiments of this application. FIG. 7 is a diagram of a structure of a foldable electronic device assembly according to some other embodiments of this application. It may be understood that, in the accompanying drawings of the specification of this application, FIG. 6 and FIG. 7 are used as an example. Gaps are shown between a protection housing body 110 and a housing 210, and between a flexible display protection structure 120 and a foldable electronic device 200. This does not mean that the protection housing body 110 and the housing 210 are spaced apart, or that the flexible display protection structure 120 and the foldable electronic device 200 spaced apart.

For example, as shown in FIG. 6 and FIG. 7, the protection housing body 110 may be clamped to a third housing 213.

It may be understood that a second housing 212 and the third housing 213 are folded relative to each other and toward a flexible display 201, so that when the second housing 212 and the third housing 213 are folded relative to each other, the flexible display 201 is not exposed from the third housing 213. Therefore, the protection housing body 110 is clamped to the third housing 213, so that the protection housing body 110 can be prevented from blocking the flexible display 201, and impact caused by a foldable electronic device protection housing 100 on the foldable electronic device 200 can be reduced.

It may be understood that a shape of the protection housing body 110 is adapted to a shape of the third housing 213, so that the protection housing body 110 can be clamped to the third housing 213. In some examples, a camera (not shown in the figure) of the foldable electronic device 200 is embedded in a camera through hole provided on the third housing 213. As shown in FIG. 2 and FIG. 3, a camera through hole P2 is provided on the protection housing body 110. When the protection housing body 110 is clamped to the third housing 213, the camera through hole P2 can expose the camera of the foldable electronic device 200, to prevent the protection housing body 110 from blocking the camera of the foldable electronic device 200.

In some examples, as shown in FIG. 2, FIG. 3, FIG. 4, and FIG. 5, a charging port through hole P3 may further be provided on the protection housing body 110. When the protection housing body 110 is clamped to the third housing 213, the charging port through hole P3 can expose a charging port of the foldable electronic device 200, to prevent the protection housing body 110 from blocking the charging port of the foldable electronic device 200.

It may be understood that the flexible display protection structure 120 is configured to protect a flexible display 201a in an outward-folding area. In some examples, as shown in FIG. 6 and FIG. 7, the flexible display protection structure 120 includes a protection portion 122. When a first housing 211 and the second housing 212 are folded relative to each other, the protection portion 122 is attached to at least a part of the flexible display 201a in the outward-folding area.

As shown in FIG. 6 and FIG. 7, when the first housing 211 and the second housing 212 are folded relative to each other, the protection portion 122 may be located, in a thickness direction Z of the protection housing body 110, on a side that is of the protection housing body 110 and that is close to the foldable electronic device 200, and is attached to at least a part of the flexible display 201a in the outward-folding area, to protect at least a part of the flexible display 201a in the outward-folding area, thereby reducing a risk of damage to the flexible display 201a in the outward-folding area. For example, the protection portion 122 may be attached to flexible displays 201a in the entire outward-folding area, or the protection portion 122 may be attached to a flexible display 201a in a part of the outward-folding area.

For example, through the foregoing disposing, reliability of the flexible display 201a in the outward-folding area can be improved by several times.

FIG. 8 is a diagram of a structure of a flexible display protection structure according to some embodiments of this application.

In some examples, as shown in FIG. 8, a button through hole P1 is provided on the flexible display protection structure 120. When a protection portion 122 is attached to at least a part of a flexible display 201a in an outward-folding area, the button through hole P1 can expose a button of a foldable electronic device 200. In some other examples, the button through hole P1 may alternatively be disposed on a protection housing body 110 (as shown in FIG. 4).

The button through hole P1 is provided, so that impact caused by a foldable electronic device protection housing 100 on the foldable electronic device 200 can be reduced, and operation convenience of the foldable electronic device 200 can be improved. In addition, the button through hole P1 is provided on the flexible display protection structure 120 or the protection housing body 110, thereby improving flexibility of providing the button through hole P1.

In some examples, the protection portion 122 may be attracted to the flexible display 201a in the outward-folding area. The following describes an example of a structure of the protection portion 122 when the protection portion 122 is attracted to the flexible display 201a in the outward-folding area.

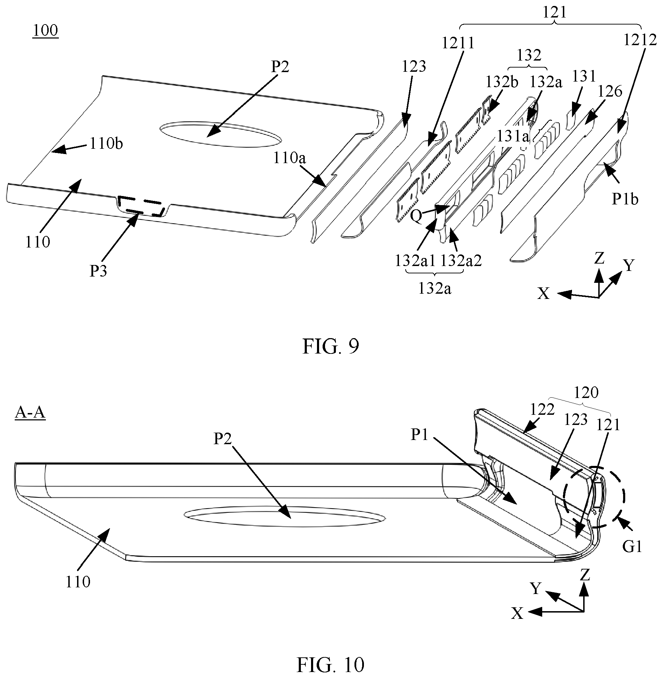

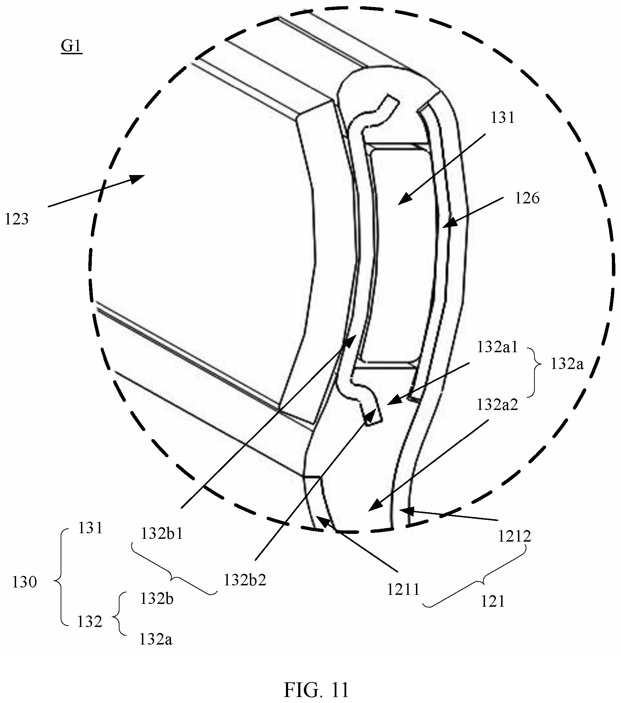

FIG. 9 is an exploded view of a structure of the foldable electronic device protection housing in FIG. 2 in some other embodiments. FIG. 10 is a cross-sectional view of a foldable electronic device protection housing in FIG. 2 in an A-A direction in some embodiments. FIG. 11 is a partially enlarged view of an area G1 in FIG. 10.

In some examples, as shown in FIG. 9, FIG. 10, and FIG. 11, a protection portion 122 includes a first magnetic attraction member 131. When a first housing 211 and a second housing 212 are folded relative to each other, the first magnetic attraction member 131 is attracted to a first hinge 202.

For example, the first magnetic attraction member 131 may be a magnet. The first magnetic attraction member 131 may be attracted to a magnetic member of the first hinge 202. It may be understood that when the first magnetic attraction member 131 is attracted to the first hinge 202, at least a part of a flexible display 201a in an outward-folding area can be located between the first magnetic attraction member 131 and the first hinge 202, so that the protection portion 122 can be attached to at least a part of the flexible display 201a in the outward-folding area, thereby protecting at least a part of the flexible display 201a in the outward-folding area.

In addition, through the foregoing disposing, convenience of attaching the protection portion 122 to the flexible display 201a in the outward-folding area and separating the protection portion 122 from the flexible display 201a in the outward-folding area is improved, thereby improving use convenience of the foldable electronic device protection housing 100.

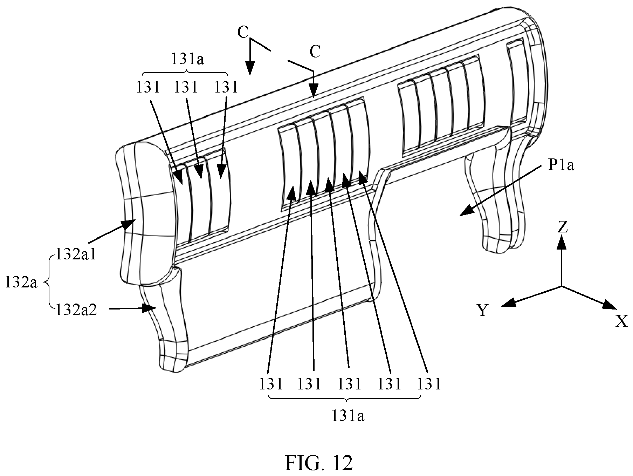

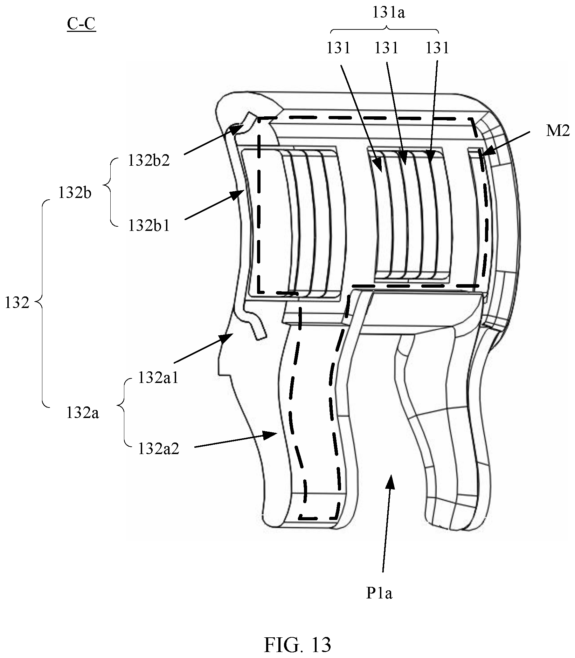

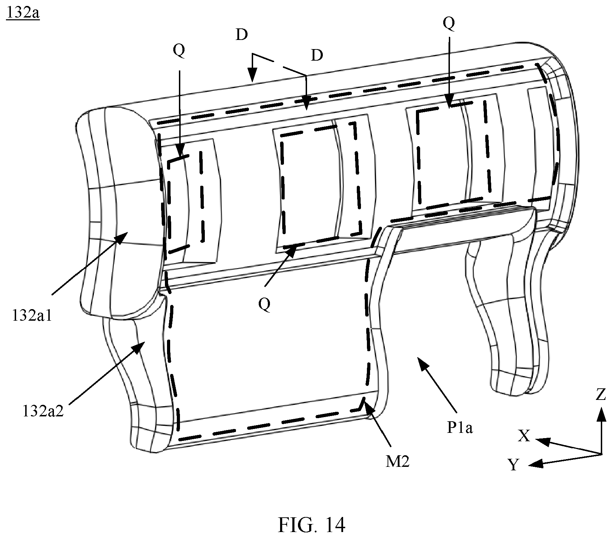

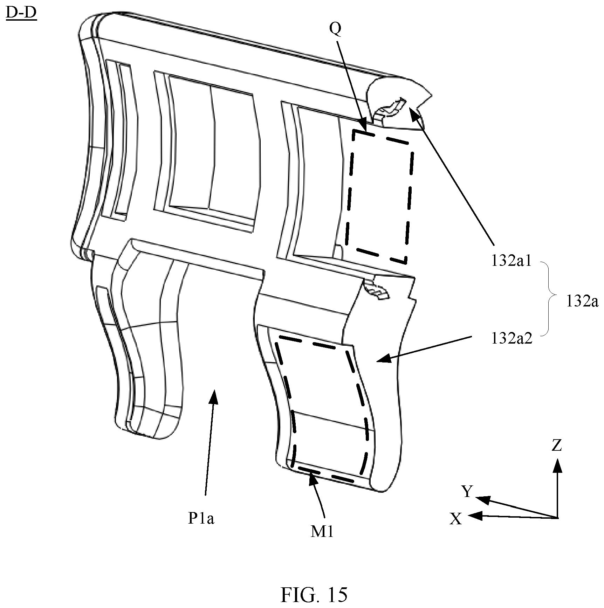

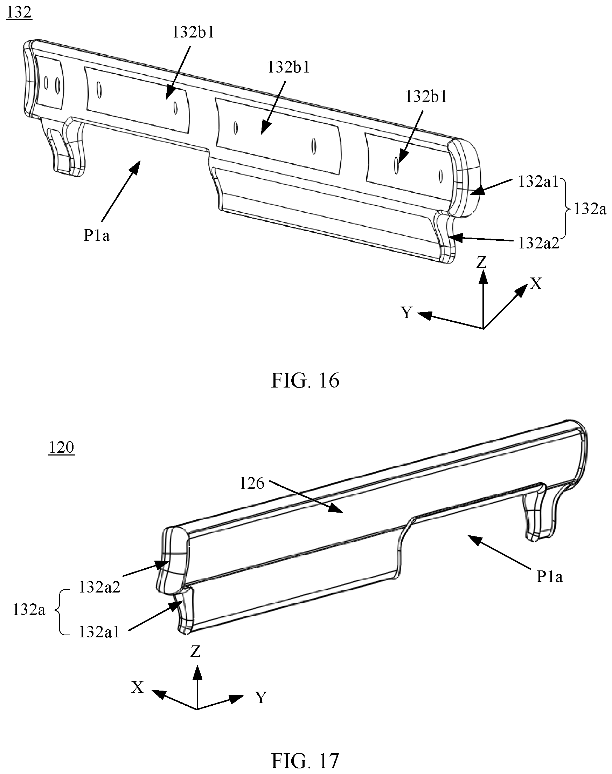

FIG. 12 is a diagram of structures of a magnetic attraction member and a support plate according to some embodiments of this application. FIG. 13 is a cross-sectional view of the magnetic attraction member and the support plate in FIG. 12 in a C-C direction in some embodiments. FIG. 14 is a diagram of a structure of an injection molding member according to some embodiments of this application. FIG. 15 is a cross-sectional view of the injection molding member in FIG. 14 in a D-D direction in some embodiments. FIG. 16 is a diagram of a structure of a support plate according to some embodiments of this application.

In some examples, as shown in FIG. 11, the protection portion 122 includes the support plate 132. As shown in FIG. 12, FIG. 13, FIG. 14, and FIG. 15, an accommodation hole Q is provided on the support plate 132, and a first magnetic attraction member 131 is embedded in the accommodation hole Q.

For example, a shape of the accommodation hole Q is the same as a shape of the first magnetic attraction member 131, so that the first magnetic attraction member 131 can be embedded in the accommodation hole Q. The accommodation hole Q may be a through hole. In this case, the accommodation hole Q penetrates the support plate 132 in a thickness direction of the support plate 132. Alternatively, the accommodation hole Q may be a blind hole. In this case, in the thickness direction of the support plate 132, the accommodation hole Q does not penetrate the support plate 132.

It may be understood that the first magnetic attraction member 131 is embedded in the accommodation hole Q, so that the support plate 132 can support and protect the first magnetic attraction member 131, thereby reducing a risk of breaking the first magnetic attraction member 131, and improving use reliability of a foldable electronic device protection housing 100.

In some examples, as shown in FIG. 12 and FIG. 13, there are a plurality of first magnetic attraction members 131, and at least two of the plurality of first magnetic attraction members 131 are spaced apart in an extension direction of the support plate 132.

The support plate 132 may extend in a second direction Y, and the second direction Y intersects with a first direction X. For example, the second direction Y may be perpendicular to the first direction X, or an acute angle may exist between the second direction Y and the first direction X. A thickness direction Z of a protection housing body 110 is perpendicular to a plane in which the first direction X and the second direction Y are located.

For example, as shown in FIG. 12 and FIG. 13, the plurality of first magnetic attraction members 131 may form at least two magnetic attraction groups 131a, and any magnetic attraction group 131a includes at least two first magnetic attraction members 131. Quantities of first magnetic attraction members 131 in different magnetic attraction groups 131a may be the same or may be different. The at least two first magnetic attraction members 131 in a same magnetic attraction group 131a are adjacently disposed in the extension direction (for example, the second direction Y) of the support plate 132.

As shown in FIG. 14 and FIG. 15, there are a plurality of accommodation holes Q, the plurality of accommodation holes Q are spaced apart in the extension direction (for example, the second direction Y) of the support plate 132, and one magnetic attraction group 131a is embedded in one accommodation hole Q, so that the plurality of magnetic attraction groups 131a can be spaced apart in the extension direction (for example, the second direction Y) of the support plate 132, that is, at least two of the plurality of first magnetic attraction members 131 can be spaced apart in the extension direction (for example, the second direction Y) of the support plate 132.

Alternatively, one first magnetic attraction member 131 may be embedded in one accommodation hole Q, and a plurality of accommodation holes Q are spaced apart in the extension direction (for example, the second direction Y) of the support plate 132, so that the plurality of first magnetic attraction members 131 can be spaced apart in the extension direction (for example, the second direction Y) of the support plate 132.

It may be understood that at least two of the plurality of first magnetic attraction members 131 are spaced apart in the extension direction (for example, the second direction Y) of the support plate 132, so that the plurality of first magnetic attraction members 131 can be attracted to different positions of a first hinge 202 in the extension direction (for example, the second direction Y) of the support plate 132, and the protection portion 122 can be attached to different positions of a flexible display 201a in an outward-folding area in the extension direction (for example, the second direction Y) of the support plate 132, thereby improving a protection effect of the protection portion 122 on the flexible display 201a in the outward-folding area, and reducing a risk of damage to the flexible display 201a in the outward-folding area.

In some examples, as shown in FIG. 16, the support plate 132 includes an injection molding member 132a and a metal sheet 132b, and the injection molding member 132a and the metal sheet 132b are formed through injection molding.

For example, a material of the injection molding member 132a may include plastic, and a material of the metal sheet 132b may include steel. Alternatively, the injection molding member 132a and the metal sheet 132b may be another material. The injection molding member 132a and the metal sheet 132b are formed through injection molding, so that mechanical strength of the support plate 132 can be improved, a protection effect of the support plate 132 on the first magnetic attraction member 131 can be improved, a risk of breaking the first magnetic attraction member 131 can be reduced, and use reliability of the foldable electronic device protection housing 100 can be improved. In addition, the injection molding member 132a and the metal sheet 132b are formed through injection molding, so that reliability of a connection between the two can be improved.

In some examples, as shown in FIG. 13, the accommodation metal sheet 132b includes a metal sheet body 132b1 and a metal connection portion 132b2, and the metal sheet body 132b1 is connected to the metal connection portion 132b2. For example, the metal sheet body 132b1 and the metal connection portion 132b2 are integrally formed, to improve reliability of a connection between the two.

The metal connection portion 132b2 is embedded in the injection molding member 132a. When the protection portion 122 is attached to at least a part of the flexible display 201a in the outward-folding area, the metal sheet body 132b1 is closer to the flexible display 201 than the first magnetic attraction member 131.

For example, as shown in FIG. 14 and FIG. 15, an accommodation hole Q is provided on the injection molding member 132a, and penetrates the injection molding member 132a in a thickness direction of the injection molding member 132a. The metal connection portion 132b2 is embedded in the injection molding member 132a, so that the metal sheet 132b can be connected to the injection molding member 132a. In addition, the metal sheet body 132b1 seals an opening on a side of the accommodation hole Q.

The first magnetic attraction member 131 is embedded in the accommodation hole Q, and is located on a side of the metal sheet body 132b1. When the protection portion 122 is attached to at least a part of the flexible display 201a in the outward-folding area, the metal sheet body 132b1 is closer to the flexible display 201 than the first magnetic attraction member 131. In this way, the metal sheet body 132b1 can isolate the first magnetic attraction member 131 from the flexible display 201a in the outward-folding area, to reduce a risk that is of damage to the flexible display 201a in the outward-folding area or the first magnetic attraction member 131 and that is caused by the first magnetic attraction member 131 colliding with the flexible display 201a in the outward-folding area when the protection portion 122 is attached to the flexible display 201a in the outward-folding area, thereby improving use reliability of the foldable electronic device protection housing 100.

In some examples, when the protection portion 122 is attached to the flexible display 201a in the outward-folding area, as shown in FIG. 16, a surface on a side that is of the metal sheet body 132b1 and that is close to the flexible display 201 is flush with a surface on a side that is of the injection molding member 132a and that is close to the flexible display 201, to improve structural normalization of the support plate 132.

In some examples, the metal sheet body 132b1 includes a non-magnetic material.

In this way, impact caused by the metal sheet body 132b1 on magnetic attraction between the first magnetic attraction member 131 and the first hinge 202 can be reduced, and reliability of magnetic attraction between the protection portion 122 and at least a part of the flexible display 201a in the outward-folding area can be improved, thereby improving use reliability of the foldable electronic device protection housing 100.

For example, a material of the metal sheet body 132b1 may include non-magnetic steel. Alternatively, the metal sheet body 132b1 may be another non-magnetic metal material. A material of the metal sheet body 132b1 is not further limited in this embodiment of this application. It may be understood that the material of the metal sheet body 132b1 may be the same as or different from a material of the metal connection portion 132b2.

In some examples, as shown in FIG. 14 and FIG. 15, the injection molding member 132a includes an injection molding member body 132a1 and an injection molding connection portion 132a2, and the injection molding member body 132a1 is connected to the injection molding connection portion 132a2. An accommodation hole Q is provided on the injection molding member body 132a1.

For example, the injection molding member body 132a1 and the injection molding connection portion 132a2 are integrally formed, to improve reliability of a connection between the two. The accommodation hole Q penetrates the injection molding member body 132a1 in a thickness direction of the injection molding member body 132a1.

When a button through hole P1 is provided on a flexible display protection structure 120, as shown in FIG. 14 and FIG. 15, a first button through hole P1a is provided on the injection molding connection portion 132a2, and the first button through hole P1a penetrates the injection molding connection portion 132a2 in a thickness direction of the injection molding connection portion 132a2. For example, the first button through hole P1a may communicate with another through hole (for example, a second button through hole P1b provided on a first connection portion 121), to form the button through hole P1. When the protection portion 122 is attached to at least a part of the flexible display 201a in the outward-folding area, the first button through hole P1a can expose a button of the foldable electronic device 200.

It may be understood that the first button through hole P1a is provided on the injection molding connection portion 132a2, so that impact caused by the foldable electronic device protection housing 100 on the foldable electronic device 200 can be reduced.

FIG. 17 is a diagram of a position relationship between an injection molding member and a first cover portion according to some embodiments of this application.

In some examples, as shown in FIG. 11 and FIG. 17, the flexible display protection structure 120 further includes the first cover portion 126. The first cover portion 126 is located on a side that is of a first magnetic attraction member 131 and that is away from a metal sheet body 132b1, and seals an opening of an accommodation hole Q.

For example, a quantity of first cover portions 126 may be the same as a quantity of accommodation holes Q, and one first cover portion 126 seals an opening of one accommodation hole Q. Alternatively, there may be one first cover portion 126, and one first cover portion 126 seals openings of a plurality of accommodation holes Q that are spaced apart in a second direction Y.

The first cover portion 126 is disposed on the side that is of the first magnetic attraction member 131 and that is away from the metal sheet body 132b1, and the opening of the accommodation hole Q is sealed, so that the first cover portion 126 can block a mark of the first magnetic attraction member 131, thereby reducing impact caused by the first magnetic attraction member 131 on an appearance of a protection portion 122, and improving surface smoothness of an external surface (a surface on a side that is away from a flexible display 201 when the protection portion 122 is attached to the flexible display 201) of the protection portion 122.

In some examples, a material of the first cover portion 126 includes polycarbonate (polycarbonate, PC). In this way, a weight of the first cover portion 126 can be reduced, thereby reducing a weight of a foldable electronic device protection housing 100.

It may be understood that the first cover portion 126 may alternatively be another non-metal material. The material of the first cover portion 126 is not further limited in this embodiment of this application.

In some other examples, when a first housing 211 and a second housing 212 are folded relative to each other, the protection portion 122 is clamped to at least a part of a flexible display 201a in an outward-folding area.

It may be understood that at least a part of the protection portion 122 is clamped to the flexible display 201a in the outward-folding area, so that the protection portion 122 can be attached to at least a part of the flexible display 201a in the outward-folding area, thereby protecting at least a part of the flexible display 201a in the outward-folding area. In addition, through clamping, compared with magnetic attraction the protection portion 122 to the flexible display 201a in the outward-folding area, no magnetic attraction member needs to be disposed, so that a structure of the protection portion can be simplified, and costs of the foldable electronic device protection housing 100 can be reduced.

For example, a bending radian of the protection portion 122 is the same as or approximately the same as a bending radian of the flexible display 201a in the outward-folding area, so that the protection portion 122 can be clamped to the flexible display 201a in the outward-folding area.

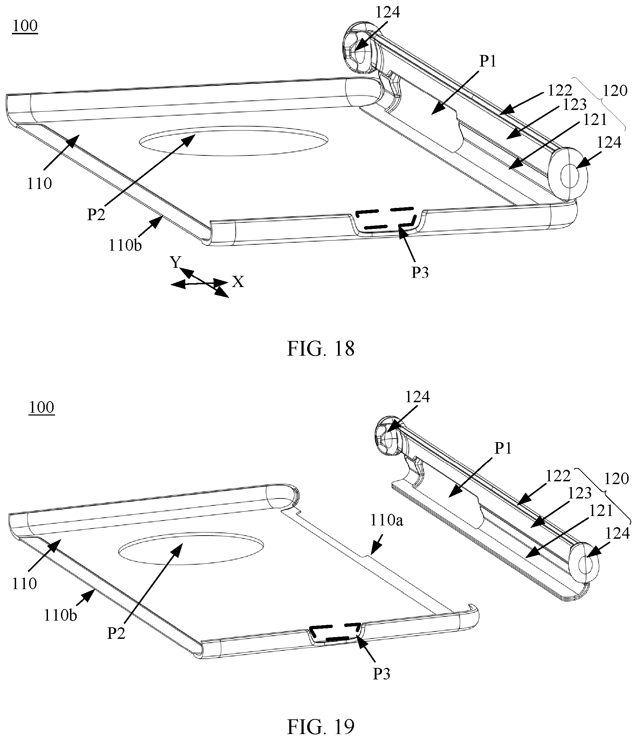

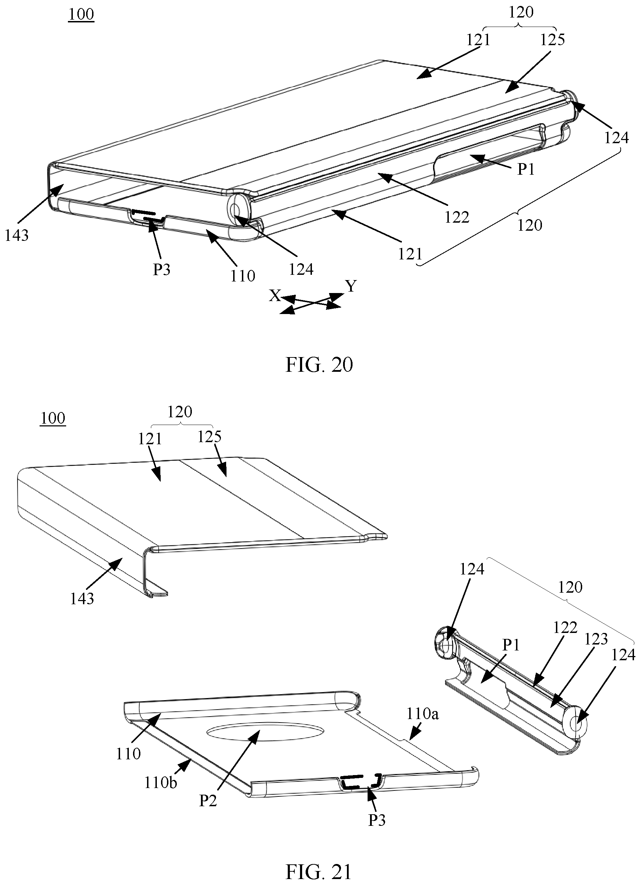

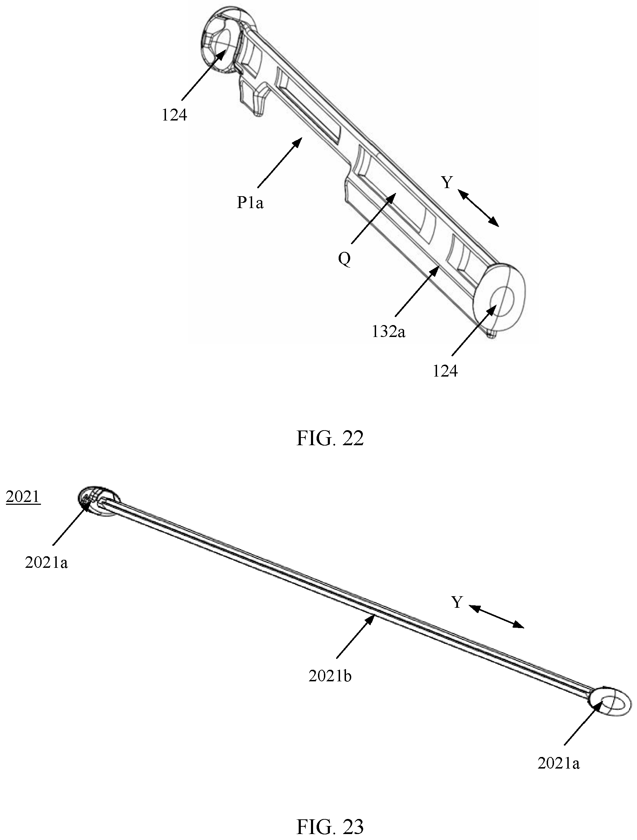

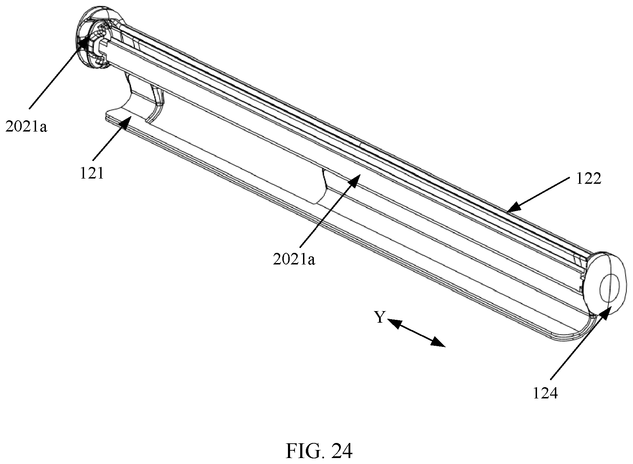

FIG. 18 is a diagram of a structure of a foldable electronic device protection housing according to still some other embodiments of this application. FIG. 19 is an exploded view of a structure in FIG. 18 in some embodiments. FIG. 20 is a diagram of a structure of a foldable electronic device protection housing according to still some other embodiments of this application. FIG. 21 is an exploded view of a structure in FIG. 20 in some embodiments. FIG. 22 is a diagram of a structure of an injection molding member according to some embodiments of this application. FIG. 23 is a diagram of a structure of an appearance member of a first hinge according to some embodiments of this application. FIG. 24 is a diagram of a cooperation relationship between a protection structure and an appearance member according to some embodiments of this application.

In some examples, as shown in FIG. 18, FIG. 19, FIG. 20, and FIG. 21, the flexible display protection structure 120 further includes a clamping portion 124. The clamping portion 124 is located on a side of a protection portion 122 in an extension direction of the protection portion 122 and is connected to the protection portion 122. For example, the clamping portion 124 and the protection portion 122 may be of an integrated structure, to improve reliability of a connection between the two. When the protection portion 122 includes a support plate 132, as shown in FIG. 22, the clamping portion 124 and an injection molding member 132a of the support plate 132 may be integrally formed.

For example, as shown in FIG. 23, the first hinge 202 may include an appearance member 2021. The appearance member 2021 may include a protruding end 2021a and a connection rod 2021b. The connection rod 2021b may extend in a second direction Y. There are two protruding ends 2021a. The two protruding ends 2021a are located on two sides of the connection rod 2021b in the second direction Y, and are separately connected to the connection rod 2021b. For example, the protruding end 2021a and the connection rod 2021b may be of an integrated structure, to improve reliability of a connection between the two.

As shown in FIG. 23, in the second direction Y, a position at which the protruding end 2021a is connected to the connection rod 2021b protrudes from a position at which the protruding end 2021a is not connected to the connection rod 2021b. For example, the protruding end 2021a is similar to a mushroom head shape.

As shown in FIG. 24, when the protection portion 122 is attached to a flexible display 201a in least a part of an outward-folding area, the clamping portion 124 is clamped to an end portion of first hinge 202.

It may be understood that when the protection portion 122 is attached to the flexible display 201a in least a part of the outward-folding area, the clamping portion 124 is clamped to the protruding end 2021a. When the protection portion 122 is separated from at least a part of the flexible display 201a in of the outward-folding area, the clamping portion 124 is separated from the protruding end 2021a.

In some examples, a shape of the protection portion 122 is adapted to a shape of the protruding end 2021a, so that the clamping portion 124 can be clamped to the protruding end 2021a. In some other examples, a protrusion is disposed on one of the protection portion 122 and the protruding end 2021a, and a groove is provided on the other. The protrusion can be embedded in the groove, so that the protection portion 122 can be clamped to the protruding end 2021a. In some other examples, the protection portion 122 may alternatively be clamped to the protruding end 2021a in another manner. A manner of clamping the protection portion 122 to the protruding end 2021a is not further limited in this embodiment of this application.

The clamping portion 124 is disposed, so that the flexible display protection structure 120 can be connected to the first hinge 202 through clamping, thereby improving reliability of attachment between the protection portion 122 and the flexible display 201a in the outward-folding area, and improving use reliability of the foldable electronic device protection housing 100.

In some examples, as shown in FIG. 18, FIG. 19, FIG. 20, and FIG. 21, there are two clamping portions 124, and the two clamping portions 124 are located on two sides of the protection portion 122 in the extension direction of the protection portion 122 and are separately connected to the protection portion 122.

In this way, the two clamping portions 124 can be separately clamped to two ends of the first hinge 202, thereby improving reliability of clamping between the flexible display protection structure 120 and the first hinge 202, and improving use reliability of the foldable electronic device protection housing 100.

It may be understood that the two clamping portions 124 may be clamped to the two ends of the first hinge 202 in a same manner or different manners.

In some examples, when the clamping portion 124 is clamped to the end portion of the first hinge 202, the clamping portion 124 protrudes from the flexible display 201a in the outward-folding area in a thickness direction Z of a protection housing body 110.

In some examples, as shown in FIG. 24, when the clamping portion 124 is clamped to the end portion of the first hinge 202, the clamping portion 124 can cover the protruding end 2021a, so that the clamping portion 124 can protrude from the flexible display 201a in the outward-folding area in the thickness direction Z of the protection housing body 110.

When the clamping portion 124 is clamped to the end portion of the first hinge 202, the clamping portion 124 protrudes from the flexible display 201a in the outward-folding area in the thickness direction Z of the protection housing body 110. When a foldable electronic device 200 falls off or is hit, the clamping portion 124 can collide with a foreign matter before the flexible display 201a in the outward-folding area and a flexible display 201 connected to a first housing 211, thereby reducing a risk of damage to the flexible display 201a in the outward-folding area and the flexible display 201 connected to the first housing 211 because the flexible display 201a in the outward-folding area and the flexible display 201 connected to the first housing 211 directly collide with the foreign matter.

In some examples, as shown in FIG. 18 and FIG. 19, the flexible display protection structure 120 further includes a buffering portion 123, and the buffering portion 123 is connected to the protection portion 122. When the protection portion 122 is attached to at least a part of the flexible display 201a in the outward-folding area, the buffering portion 123 is located between the flexible display 201a in the outward-folding area and the protection portion 122.

For example, the buffering portion 123 may include a flexible material, to play a buffering role. For example, the buffering portion 123 may include a soft adhesive. When the protection portion 122 includes a support plate 132, the buffering portion 123 may be connected to a surface on a side that is of the injection molding member 132a and a metal sheet 132b of the support plate 132 and that is away from a first magnetic attraction member 131.

For example, when the protection portion 122 is attached to the flexible display 201a in the outward-folding area, the buffering portion 123 may come into direct contact with the flexible display 201a in the outward-folding area.

The buffering portion 123 is disposed, so that impact caused by the protection portion 122 on the flexible display 201a in the outward-folding area when the protection portion 122 is attached to the flexible display 201a in the outward-folding area can be buffered, and a risk of damage to the flexible display 201a in the outward-folding area can be reduced.

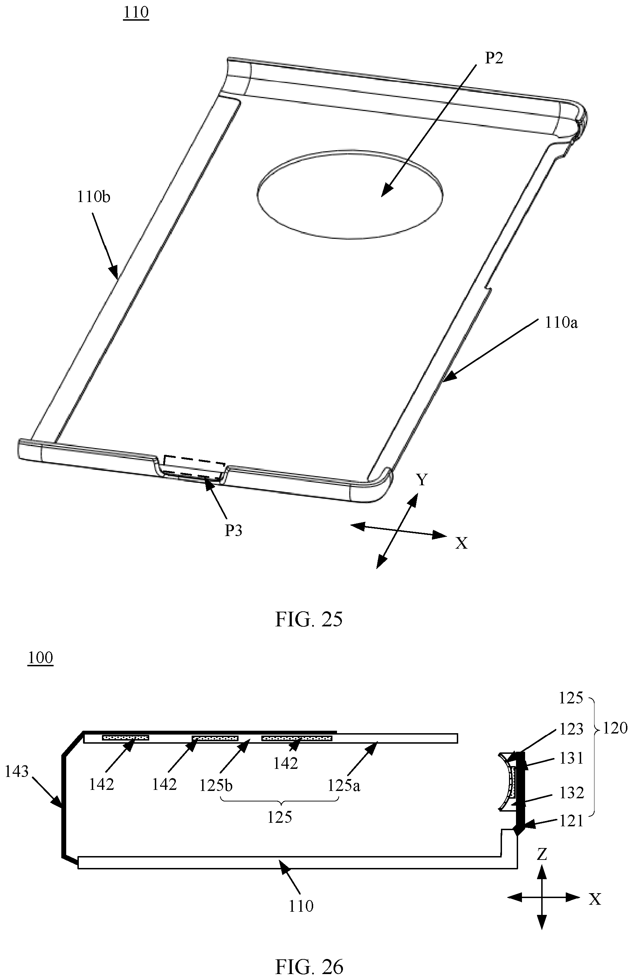

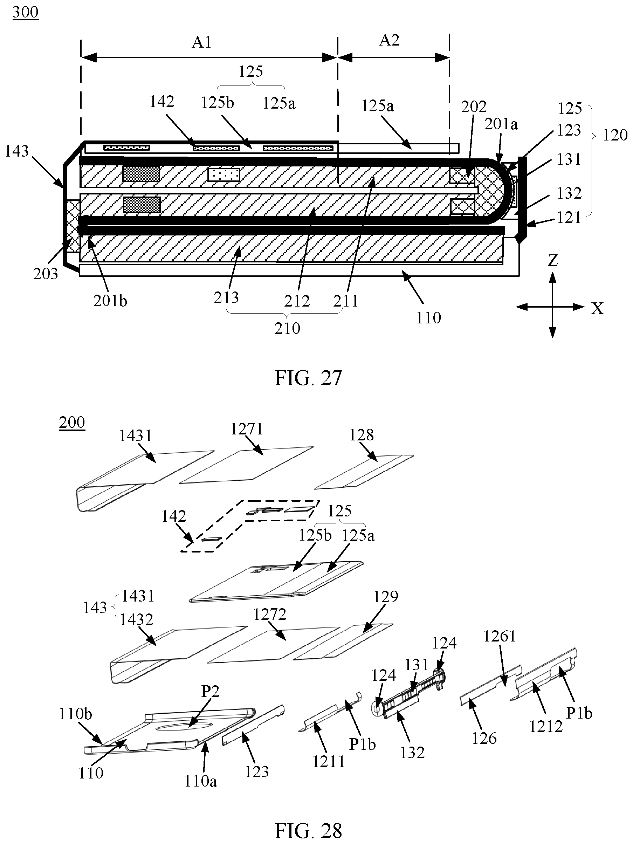

FIG. 25 is a diagram of a structure of a protection housing body according to some embodiments of this application. FIG. 26 is a diagram of a structure of a foldable electronic device protection housing according to still some other embodiments of this application. FIG. 27 is a diagram of a structure of a foldable electronic device assembly according to still some other embodiments of this application.

In some examples, as shown in FIG. 25, the protection housing body 110 has a first edge 110a and a second edge 110b that are disposed relative to each other in a first direction X. When a first housing 211 and a second housing 212 are folded relative to each other, and the second housing 212 and a third housing 213 are folded relative to each other, the first edge 110a is closer to a flexible display 201a in an outward-folding area than the second edge 110b. A flexible display protection structure 120 is connected to at least one of the first edge 110a and the second edge 110b.

For example, the flexible display protection structure 120 may be connected to the first edge 110a (as shown in FIG. 2), or the flexible display protection structure 120 may be connected to the second edge 110b (as shown in FIG. 4). Alternatively, as shown in FIG. 26 and FIG. 27, the flexible display protection structure 120 may be connected to the first edge 110a and the second edge 110b.

When the flexible display protection structure 120 is connected to the second edge 110b, or the flexible display protection structure 120 is connected to the first edge 110a and the second edge 110b, the flexible display protection structure 120 may surround parts (as shown in FIG. 7 and FIG. 25) that are of the first housing 211 and the second housing 212 and that are away from the third housing 213.

The flexible display protection structure 120 is connected to at least one of the first edge 110a and the second edge 110b, so that flexibility of a connection between the flexible display protection structure 120 and the protection housing body 110 can be improved.

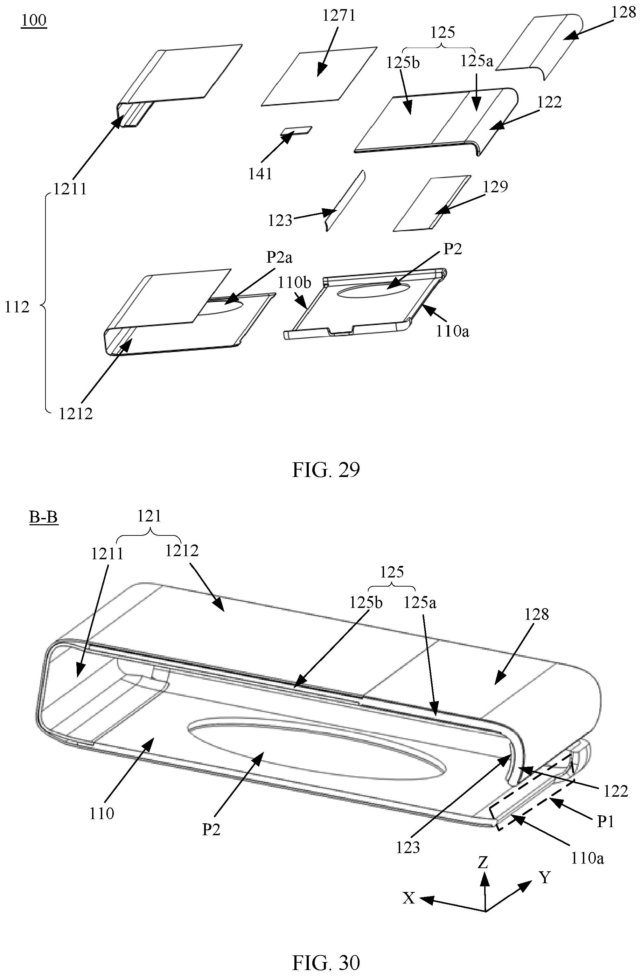

FIG. 28 is an exploded view of a structure of the foldable electronic device protection housing in FIG. 20 in some other embodiments. FIG. 29 is an exploded view of a structure of the foldable electronic device protection housing in FIG. 4 in some other embodiments. FIG. 30 is a cross-sectional view of the foldable electronic device protection housing in FIG. 4 in a B-B direction in some embodiments.

In some examples, as shown in FIG. 28, FIG. 29, and FIG. 30, a flexible display protection structure 120 further includes a window portion 125. As shown in FIG. 27, when a first housing 211 and a second housing 212 are folded relative to each other, and the second housing 212 and a third housing 213 are folded relative to each other, the window portion 125 covers at least a part of a flexible display 201 connected to the first housing 211. The window portion 125 includes a transparent material.

It may be understood that the window portion 125 is disposed to cover at least a part of the flexible display 201 connected to the first housing 211, so that the window portion 125 can protect the flexible display 201 connected to the first housing 211. In addition, the window portion 125 includes a transparent material, so that a user can observe, by using the window portion 125, information displayed on the part that is of the flexible display 201 and that is covered by the window portion 125, thereby reducing impact caused by the foldable electronic device protection housing 100 on a foldable electronic device 200.

In some examples, as shown in FIG. 27, the window portion 125 is connected to a second edge 110b, and a protection portion 122 is connected to a first edge 110a. Alternatively, as shown in FIG. 30, a protection portion 122 is connected to the window portion 125. When the protection portion 122 is connected to the window portion 125, a side of the window portion 125 is connected to the protection housing body 110, and the other side is connected to the protection portion 122.

It may be understood that the protection portion 122 is connected to the first edge 110a or the protection portion 122 is connected to the window portion 125, so that flexibility of disposing the protection portion 122 can be improved.

It may be understood that the window portion 125 is connected to the second edge 110b, and when the protection portion 122 is connected to the first edge 110a, the flexible display protection structure 120 is connected to the first edge 110a and the second edge 110b. When the protection portion 122 is connected to the window portion 125, the flexible display protection structure 120 is connected to the second edge 110b. When the flexible display protection structure 120 includes only the protection portion 122 and does not include the window portion 125, the flexible display protection structure 120 (that is, the protection portion 122) is connected to the first edge 110a.

An example in which the flexible display protection structure 120 includes the protection portion 122 and the window portion 125 is used below for further description.

It may be understood that, as shown in FIG. 27, when the protection portion 122 is connected to the first edge 110a, the first housing 211 and the second housing 212 are folded relative to each other, and the second housing 212 and the third housing 213 are folded relative to each other. The protection portion 122 can be located, in a first direction X, on a side that is of the protection housing body 110 and that is close to a flexible display 201a in an outward-folding area. This reduces a distance between the protection portion 122 and the flexible display 201a in the outward-folding area, so that the protection portion 122 can be attached to the flexible display 201a in the outward-folding area.

In addition, the protection portion 122 is connected to the first edge 110a, and the window portion 125 is connected to the second edge 110b, so that mutual impact between the protection portion 122 and the window portion 125 can be reduced. For example, when the protection portion 122 is connected to the first edge 110a, the protection portion 122 may be attracted to the flexible display 201a in the outward-folding area.

When the protection portion 122 is connected to the window portion 125, the window portion 125 covers at least a part of the flexible display 201 connected to the first housing 211, so that the protection portion 122 can be located, in the first direction X, on a side of the flexible display 201a in the outward-folding area (as shown in FIG. 7), and the protection portion 122 can be attached to the flexible display 201a in the outward-folding area.

For example, the window portion 125 and the protection portion 122 may be of an integrally formed structure, to improve reliability of a connection between the two. Materials of the protection portion 122 and the window portion 125 may be the same or may be different. For example, when the protection portion 122 is connected to a side that is of the window portion 125 and that is away from the protection housing body 110, the protection portion 122 may be attached to the flexible display 201a in the outward-folding area through clamping.

For example, when the protection portion 122 is connected to the first edge 110a, a button through hole P1 may be provided on the flexible display protection structure 120. When the protection portion 122 is connected to the second edge 110b, the button through hole P1 may be provided on the protection housing body 110.

In some examples, as shown in FIG. 27, the flexible display 201 connected to the first housing 211 has a first area A1 and a second area A2 that are sequentially disposed in the first direction X. When the first housing 211 and the second housing 212 are unfolded relative to each other, the first area A1 is closer to the second housing 212 than the second area A2. It may be understood that widths of the first area A1 and the second area A2 in the first direction X may be the same or may be different. In some examples, the width of the first area A1 in the first direction X is greater than the width of the second area A2 in the first direction X.

The window portion 125 includes a window portion body 125a. When the first housing 211 and the second housing 212 are folded relative to each other, and the second housing 212 and the third housing 213 are folded relative to each other, the window portion body 125a covers the second area A2.

It may be understood that the window portion body 125a includes a transparent material. In this way, when the window portion 125 covers the flexible display 201 connected to the first housing 211, the user can observe, by using the window portion body 125a, information displayed in the second area A2, thereby reducing impact caused by the foldable electronic device protection housing 100 on the foldable electronic device 200.

In some examples, as shown in FIG. 28, when the protection portion 122 is connected to the first edge 110a, the flexible display protection structure 120 further includes a first connection portion 121, and the first connection portion 121 is connected to the protection housing body 110 and the protection portion 122.

For example, the first connection portion 121 may be connected to the protection housing body 110 and the protection portion 122 through bonding, or the first connection portion 121 may be connected to the protection housing body 110 and the protection portion 122 through clamping or a bolt connection. A manner of connecting the first connection portion 121 to the protection housing body 110 may be the same as or different from a manner of connecting the first connection portion 121 to the protection portion 122.

When the protection portion 122 includes a support plate 132, the first connection portion 121 may be connected to an injection molding connection portion 132a2 of the support plate 132, or the first connection portion 121 may be connected to an injection molding connection portion 132a2 and an injection molding member body 132a1 of the support plate 132.

For example, a button through hole P1 is provided on the flexible display protection structure 120. As shown in FIG. 28, a second button through hole P1b may be provided on the first connection portion 121, and the second button through hole P1b penetrates the first connection portion 121 in a thickness direction of the first connection portion 121. A first button through hole P1a provided on the injection molding connection portion 132a2 and the second button through hole P1b provided on the first connection portion 121 may have a same shape or different shapes. The first button through hole P1a communicates with the second button through hole P1b, to form the button through hole P1.

In some examples, as shown in FIG. 28, a button avoidance groove 1261 may be provided on a first cover portion 126, and the button avoidance groove 1261 communicates with the first button through hole P1a and the second button through hole P1b, to prevent the first cover portion 126 from blocking a button of the foldable electronic device 200.

In some examples, the first connection portion 121 includes a flexible material.

It may be understood that the first connection portion 121 is disposed to include a flexible material, so that the first connection portion 121 can be freely bent, and relative positions of the protection housing body 110 and the protection portion 122 can be relatively flexible.

For example, when the first housing 211 and the second housing 212 are unfolded relative to each other, the protection portion 122 may be located, in a thickness direction Z of the protection housing body 110, on a side that is of the protection housing body 110 and that is away from the flexible display 201, to reduce impact caused by the protection portion 122 on the foldable electronic device 200. When the first housing 211 and the second housing 212 are folded relative to each other, the protection portion 122 may be located, in the thickness direction Z of the protection housing body 110, on a side that is of the protection housing body 110 and that is close to the flexible display 201, so that the protection portion 122 can be attached to at least a part of the flexible display 201a in the outward-folding area.

In other words, the first connection portion 121 is disposed to include a flexible material, so that use flexibility of the foldable electronic device protection housing 100 can be improved, and impact of the foldable electronic device protection housing 100 on the foldable electronic device 200 can be reduced.

In some examples, a material of the first connection portion 121 includes leather. In this way, reliability of the first connection portion 121 can be improved, thereby improving reliability of a connection between the protection housing body 110 and the protection portion 122.

The following describes a manner of connecting the first connection portion 121 to the protection portion 122 and the protection housing body 110 by using an example.

In some examples, as shown in FIG. 28, the connection portion 121 includes a first connection sub-portion 1211 and a second connection sub-portion 1212. The first connection sub-portion 1211 and the second connection sub-portion 1212 are located on two sides of the protection housing body 110 in the thickness direction Z of the protection housing body 110, and are separately connected to the protection housing body 110.

For example, one of the first connection sub-portion 1211 and the second connection sub-portion 1212 is connected to an inner surface (a surface close to a side of the foldable electronic device 200 when the protection housing body 110 is clamped to the foldable electronic device 200) of the protection housing body 110, and the other is connected to an outer surface (a surface away from a side of the foldable electronic device 200 when the protection housing body 110 is clamped to the foldable electronic device 200) of the protection housing body 110.

In some examples, for example, the first connection sub-portion 1211 is connected to the inner surface of the protection housing body 110, and the second connection sub-portion 1212 is connected to the outer surface of the protection housing body 110. For example, the second connection sub-portion 1212 may cover the outer surface of the protection housing body 110, to improve reliability of a connection between the two. In this case, a sub-camera through hole P2a may be provided on the second connection sub-portion 1212, and the first sub-camera through hole P2a is connected to a camera through hole P2, so that a camera of the foldable electronic device 200 can be exposed.

When the protection portion 122 is connected to the first edge 110a, as shown in FIG. 28, the protection portion 122 is located between the first connection sub-portion 1211 and the second connection sub-portion 1212, and is connected to the first connection sub-portion 1211 and the second connection sub-portion 1212. For example, when the protection portion 122 includes a support plate 132, the first connection sub-portion 1211 and the second connection sub-portion 1212 may be located on two sides of the support plate 132 in the thickness direction of the support plate 132, and are respectively connected to the injection molding member 132a of the support plate 132.

A first groove M1 and a second groove M2 (as shown in FIG. 15 and FIG. 16) may be provided on the injection molding member 132a of the support plate 132. The first connection sub-portion 1211 is embedded in the first groove M1 and is connected to the first groove M1, so that a surface on a side that is of the first connection sub-portion 1211 and that is away from the injection molding member 132a can be flush with an inner surface (a surface on a side that is of the injection molding member 132a and that is close to the flexible display 201 when the protection portion 122 is attached to the flexible display 201a in the outward-folding area) of the injection molding member 132a.

The second connection sub-portion 1212 is embedded in the second groove M2 and is connected to the second groove M2, so that a surface on a side that is of the second connection sub-portion 1212 and that is away from the injection molding member 132a can be flush with an outer surface (a surface on a side that is of the injection molding member 132a and that is away from the flexible display 201 when the protection portion 122 is attached to the flexible display 201a in the outward-folding area) of the injection molding member 132a.

For example, the first groove M1 may be provided on an injection molding connection portion 132a2. The second groove M2 may be provided on the injection molding member body 132a1 and the injection molding connection portion 132a2, so that the second connection sub-portion 1212 can cover the first cover portion 126.

It may be understood that the protection housing body 110 and the protection portion 122 are disposed between the first connection sub-portion 1211 and the second connection sub-portion 1212, and are separately connected to the first connection sub-portion 1211 and the second connection sub-portion 1212, so that reliability of a connection between the first connection portion 121 and the protection housing body 110 and a connection between the first connection portion 121 and the protection portion 122 can be improved.

In some examples, as shown in FIG. 28 and FIG. 29, the window portion 125 further includes a window connection portion 125b, and the window connection portion 125b is connected to the window portion body 125a. For example, the window connection portion 125b and the window portion body 125a may be of an integrated structure, to improve reliability of a connection between the two. When the window portion 125 covers the flexible display 201 connected to the first housing 211, the window connection portion 125b may cover the first area A1 of the flexible display 201.

In some examples, as shown in FIG. 28, the flexible display protection structure 120 further includes a second connection portion 143, and the second connection portion 143 includes a third connection sub-portion 1431 and a fourth connection sub-portion 1432. The third connection sub-portion 1431 and the fourth connection sub-portion 1432 are separately connected to the protection housing body 110 on two sides of the thickness direction Z of the protection housing body 110.

For example, one of the third connection sub-portion 1431 and the fourth connection sub-portion 1432 is connected to the inner surface of the protection housing body 110, and the other is connected to the outer surface of the protection housing body 110. The window connection portion 125b is located between the third connection sub-portion 1431 and the fourth connection sub-portion 1432, and is connected to the third connection sub-portion 1431 and the fourth connection sub-portion 1432.

The window connection portion 125b is disposed between the third connection sub-portion 1431 and the fourth connection sub-portion 1432, and is connected to the third connection sub-portion 1431 and the fourth connection sub-portion 1432. This can prevent the second connection portion 143 from blocking the window portion body 125a, so that a user can observe, by using the window portion body 125a, information displayed in the second area A2 of the flexible display 201.

In addition, the protection housing body 110 and the window connection portion 125b are disposed between the third connection sub-portion 1431 and the fourth connection sub-portion 1432, and are respectively connected to the third connection sub-portion 1431 and the fourth connection sub-portion 1432, so that reliability of a connection between the second connection portion 143 and the protection housing body 110 and a connection between the second connection portion 143 and the window portion 125 can be improved.

For example, the third connection sub-portion 1431 and the fourth connection sub-portion 1432 may be directly connected to the window connection portion 125b, or may be indirectly connected to the window connection portion 125b by using another component.

In some examples, when the protection portion 122 is connected to the window portion 125, the first connection portion 121 is connected to the protection housing body 110 and the window portion 125, and the protection portion 122 is connected to the window portion 125. In other words, the protection portion 122 is indirectly connected to the first connection portion 121 by using the window portion 125, so that the protection portion 122 can be connected to the protection housing body 110.

For example, as shown in FIG. 28, the window connection portion 125b is located between the first connection sub-portion 1211 and the second connection sub-portion 1212, and is connected to the first connection sub-portion 1211 and the second connection sub-portion 1212. The protection portion 122 is connected to a side that is of the window portion body 125a and that is away from the window connection portion 125b.

The protection housing body 110 and the window connection portion 125b are disposed between the first connection sub-portion 1211 and the second connection sub-portion 1212, and are respectively connected to the first connection sub-portion 1211 and the second connection sub-portion 1212, so that reliability of a connection between the first connection portion 121 and the protection housing body 110 and a connection between the first connection portion 121 and the window portion 125 can be improved.

For example, the first connection sub-portion 1211 and the second connection sub-portion 1212 may be directly connected to the window connection portion 125b, or may be indirectly connected to the window connection portion 125b by using another component.

In some examples, as shown in FIG. 28 and FIG. 29, the foldable electronic device protection housing 100 further includes a first protection film 128 and a second protection film 129.

The first protection film 128 is attached to an outer surface (a surface on a side away from the flexible display 201 when the window portion body 125a covers the flexible display 201) of the window portion body 125a, and the second protection film 129 is attached to an inner surface (a surface on a side close to the flexible display 201 when the window portion body 125a covers the flexible display 201) of the window portion body 125a. It may be understood that the first protection film 128 and the second protection film 129 can protect the window portion body 125a, thereby reducing a risk of damage to the window portion body 125a.

For example, when the protection portion 122 is connected to the window portion 125, the first protection film 128 may further be attached to an outer surface of the protection portion 122, so that the protection portion 122 can be protected, and a risk of damage to the protection portion 122 can be reduced.

For example, when the window connection portion 125b is connected to the first connection sub-portion 1211 and the second connection sub-portion 1212, a surface on a side that is of the second connection sub-portion 1212 and that is away from the window connection portion 125b is flush with a surface on a side that is of the first protection film 128 and that is away from the window portion body 125a. A surface on a side that is of the first connection sub-portion 1211 and that is away from the window connection portion 125b is flush with a surface on a side that is of the second protection film 129 and that is away from the window portion body 125a.

In some examples, as shown in FIG. 29, the foldable electronic device protection housing 100 further includes a sensing member 141. For example, the sensing member 141 may be a magnet. A sensing member accommodation hole (not shown in the figure) is provided on the window connection portion 125b, and the sensing member 141 is embedded in the sensing member accommodation hole and is connected to the window connection portion 125b.

When the window portion 125 covers the flexible display 201 connected to the first housing 211, the foldable electronic device 200 can identify the sensing member 141, to adjust a display interface of the flexible display 201 connected to the first housing 211, so that a user can observe specified display information such as time, weather, and an incoming call notification by using the window portion body 125a, thereby improving use convenience of the foldable electronic device protection housing 100.

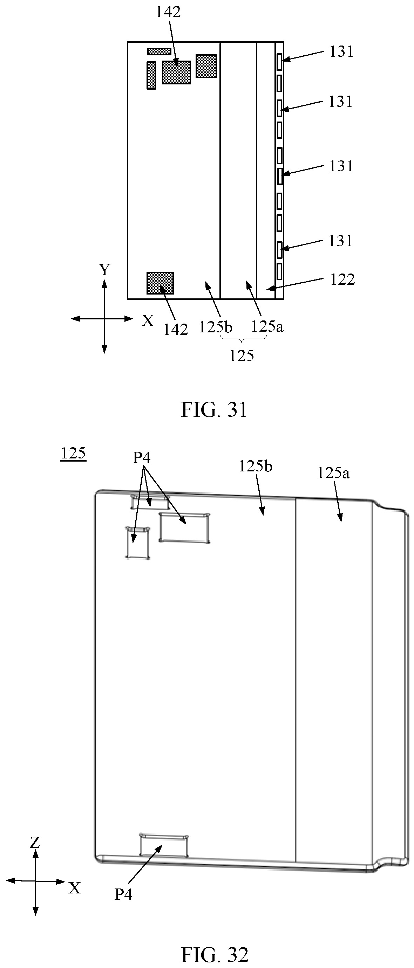

FIG. 31 is a diagram of a structure of a foldable electronic device protection housing according to still some other embodiments of this application. FIG. 32 is a diagram of a structure of a window portion according to some embodiments of this application.

In some examples, as shown in FIG. 31, the foldable electronic device protection housing 100 further includes a second magnetic attraction member 142, and the second magnetic attraction member 142 is connected to the window portion 125. For example, the second magnetic attraction member 142 may be connected to a window connection portion 125b. The second magnetic attraction member 142 is attracted to a third magnetic attraction member 205 of a foldable electronic device 200. For example, the second magnetic attraction member 142 may be a magnet.

In some examples, as shown in FIG. 32, a second magnetic attraction member accommodation hole P4 is provided on the window connection portion 125b, and the second magnetic attraction member accommodation hole P4 penetrates the window connection portion 125b in a thickness direction of the window connection portion 125b. The second magnetic attraction member 142 is embedded in the second magnetic attraction member accommodation hole P4, and is connected to the window connection portion 125b.

For example, a quantity of second magnetic attraction member accommodation holes P4 is the same as a quantity of second magnetic attraction members 142, and one second magnetic attraction member 142 is embedded in one second magnetic attraction member accommodation hole P4.

For example, a disposition position of the second magnetic attraction member 142 corresponds to a disposition position of the third magnetic attraction member 205, so that the second magnetic attraction member 142 can be attracted to the third magnetic attraction member 205. When the window portion 125 covers at least a part of a flexible display 201 connected to a first housing 211, the window portion 125 can be fixed relative to the flexible display 201 connected to the first housing 211, thereby reducing a risk of shaking between the two, and improving a protection effect of the window portion 125 on the flexible display 201 connected to the first housing 211.

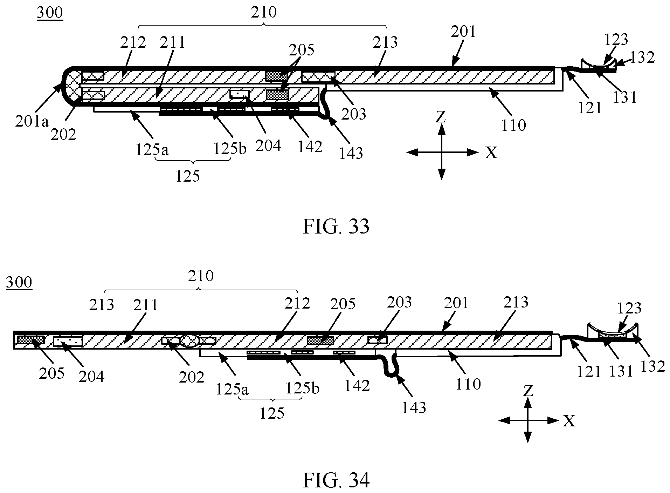

FIG. 33 is a diagram of a structure of a foldable electronic device assembly according to still some other embodiments of this application. FIG. 34 is a diagram of a structure of a foldable electronic device assembly according to still some other embodiments of this application.

Alternatively, as shown in FIG. 33, a window portion 125 may be fixed, by using a second magnetic attraction member 142, relative to a flexible display 201 connected to a first housing 211. Alternatively, as shown in FIG. 34, a window portion 125 may be fixed relative to a second housing 212 by using a second magnetic attraction member 142.

The second magnetic attraction member 142 is attracted to a third magnetic attraction member 205 of a foldable electronic device 200, so that the window portion 125 can be fixed relative to the foldable electronic device 200, and is not in a free swinging state, thereby reducing impact caused by the window portion 125 on the foldable electronic device 200, and improving user experience.

In some examples, as shown in FIG. 28 and FIG. 29, a foldable electronic device protection housing 100 further includes a second cover portion 1271. The second cover portion 1271 is connected to an outer surface (a surface on a side away from the flexible display 201 when the window connection portion 125b covers the flexible display 201) of a window connection portion 125b, to block a sensing member 141, the second magnetic attraction member 142, and the like, and reduce impact caused by the sensing member 141 and the second magnetic attraction member 142 on an appearance of a flexible display protection structure 120. It may be understood that a connection portion (for example, a first connection sub-portion 1211 and a third connection sub-portion 1431) is indirectly connected to the window connection portion 125b by using the second cover portion 1271.

In some examples, as shown in FIG. 29, a foldable electronic device protection housing 100 further includes a third cover portion 1272. The third cover portion 1272 is connected to an inner surface (a surface on a side close to the flexible display 201 when the window connection portion 125b covers the flexible display 201) of a window connection portion 125b, to block a sensing member 141, the second magnetic attraction member 142, and the like, and reduce impact caused by the sensing member 141 and the second magnetic attraction member 142 on an appearance of a flexible display protection structure 120. It may be understood that a connection portion (for example, a second connection sub-portion 1212 and a fourth connection sub-portion 1432) is indirectly connected to the window connection portion 125b by using the third cover portion 1272.

The foregoing descriptions are merely specific implementations of this application, but are not intended to limit the protection scope of this application. Any variation or replacement figured out by a person skilled in the art within the technical scope disclosed in this application shall fall within the protection scope of this application. Therefore, the protection scope of this application shall be subject to the protection scope of the claims.

## Claims

1. A foldable electronic device protection housing (100), used in a foldable electronic device (200), wherein the foldable electronic device (200) comprises a housing (210) and a flexible display (201), and the flexible display (201) is connected to the housing (210); the housing (210) comprises a first housing (211) and a second housing (212), and the first housing (211) is rotatably connected to the second housing (212) through a first hinge (202); the first housing (211) and the second housing (212) are folded relative to each other away from the flexible display (201), or the first housing (211) and the second housing (212) are unfolded relative to each other; and when the first housing (211) and the second housing (212) are folded relative to each other, a flexible display (201a) in an outward-folding area is exposed from the first housing (211) and the second housing (212); and
the foldable electronic device protection housing (100) comprises:
a protection housing body (110), clamped to the housing (210) of the foldable electronic device (200); and
a flexible display protection structure (120), connected to the protection housing body (110), wherein the flexible display protection structure (120) comprises a protection portion (122), and when the first housing (211) and the second housing (212) are folded relative to each other, the protection portion (122) is attached to at least a part of the flexible display (201a) in the outward-folding area.

2. The foldable electronic device protection housing (100) according to claim 1, wherein the protection portion (122) comprises a first magnetic attraction member (131), and when the first housing (211) and the second housing (212) are folded relative to each other, the first magnetic attraction member (131) is attracted to the first hinge (202).

3. The foldable electronic device protection housing (100) according to claim 2, wherein the protection portion (122) comprises a support plate (132), an accommodation hole (Q) is provided on the support plate (132), and the first magnetic attraction member (131) is embedded in the accommodation hole (Q).

4. The foldable electronic device protection housing (100) according to claim 3, wherein there are a plurality of first magnetic attraction members (131), and at least two of the plurality of first magnetic attraction members (131) are spaced apart in an extension direction of the support plate (132).

5. The foldable electronic device protection housing (100) according to claim 3 or 4, wherein the support plate (132) comprises an injection molding member (132a) and a metal sheet (132b), and the injection molding member (132a) and the metal sheet (132b) are formed through injection molding.

6. The foldable electronic device protection housing (100) according to claim 5, wherein the metal sheet (132b) comprises a metal sheet body (132b1) and a metal connection portion (132b2), and the metal sheet body (132b1) is connected to the metal connection portion (132b2); and
the metal connection portion (132b2) is embedded in the injection molding member (132a), and when the protection portion (122) is attached to at least a part of the flexible display (201a) in the outward-folding area, the metal sheet body (132b1) is closer to the flexible display (201) than the first magnetic attraction member (131).

7. The foldable electronic device protection housing (100) according to claim 6, wherein the metal sheet body (132b1) comprises a non-magnetic material.

8. The foldable electronic device protection housing (100) according to any one of claims 5 to 7, wherein the injection molding member (132a) comprises an injection molding member body (132a1) and an injection molding connection portion (132a2), the injection molding member body (132a1) is connected to the injection molding connection portion (132a2), and the accommodation hole (Q) is provided on the injection molding member body (132a1); and
a first button through hole (Pa) is provided on the injection molding connection portion (132a2), the first button through hole (Pa) penetrates the injection molding connection portion (132a2) in a thickness direction of the injection molding connection portion (132a2), and when the protection portion (122) is attached to at least a part of the flexible display (201a) in the outward-folding area, the first button through hole (Pa) exposes a button of the foldable electronic device (200).

9. The foldable electronic device protection housing (100) according to any one of claims 5 to 8, wherein the protection portion (122) further comprises a first cover portion (126), and the first cover portion (126) is located on a side that is of the first magnetic attraction member(131) and that is away from the metal sheet (132b), and seals an opening of the accommodation hole (Q).

10. The foldable electronic device protection housing (100) according to claim 9, wherein a material of the first cover portion (126) comprises polycarbonate.

11. The foldable electronic device protection housing (100) according to claim 1, wherein when the first housing (211) and the second housing (212) are folded relative to each other, the protection portion (122) is clamped to at least a part of the flexible display (201a) in the outward-folding area.

12. The foldable electronic device protection housing (100) according to any one of claims 1 to 11, wherein the flexible display protection structure (120) further comprises a clamping portion (124), and the clamping portion (124) is located on a side of the protection portion (122) in an extension direction of the protection portion (122), and is connected to the protection portion (122); and
when the protection portion (122) is attached to at least a part of the flexible display (201a) in the outward-folding area, the clamping portion (124) is clamped to an end portion of the first hinge (202).

13. The foldable electronic device protection housing (100) according to claim 12, wherein there are two clamping portions (124), and the two clamping portions (124) are located on two sides of the protection portion (122) in the extension direction of the protection portion (122), and are separately connected to the protection portion (122).

14. The foldable electronic device protection housing (100) according to claim 12 or 13, wherein when the clamping portion (124) is clamped to the end portion of the first hinge (202), the clamping portion (124) protrudes from the flexible display (201a) in the outward-folding area in a thickness direction (Z) of the protection housing body (110).

15. The foldable electronic device protection housing (100) according to any one of claims 1 to 14, wherein the housing (210) further comprises a third housing (213), and the third housing (213) is rotatably connected to the second housing (212); and the third housing (213) and the second housing (212) are folded relative to each other toward the flexible display (201), or the third housing (213) and the second housing (212) are unfolded relative to each other; and
the protection housing body (110) is clamped to the third housing (213).

16. The foldable electronic device protection housing (100) according to claim 15, wherein the protection housing body (110) has a first edge (110a) and a second edge (110b) that are disposed relative to each other in a first direction (X), and when the first housing (211) and the second housing (212) are folded relative to each other, and the second housing (212) and the third housing (213) are folded relative to each other, the first edge (110a) is closer to the flexible display (201a) in the outward-folding area than the second edge (110b); and
the flexible display protection structure (120) is connected to at least one of the first edge (110a) and the second edge (110b).

17. The foldable electronic device protection housing (100) according to claim 16, wherein the flexible display protection structure (120) further comprises:
a window portion (125), wherein when the first housing (211) and the second housing (212) are folded relative to each other, and the second housing (212) and the third housing (213) are folded relative to each other, the window portion (125) covers at least a part of the flexible display (201) connected to the first housing (211), and the window portion (125) comprises a transparent material, wherein
the window portion (125) is connected to the second edge (110b); and the protection portion (122) is connected to the first edge (110a), or the protection portion (122) is connected to the window portion (125).

18. The foldable electronic device protection housing (100) according to claim 17, wherein when the protection portion (122) is connected to the first edge (110a), the flexible display protection structure (120) further comprises a first connection portion (121), and the first connection portion (121) is connected to the protection housing body (110) and the protection portion (122).

19. The foldable electronic device protection housing (100) according to claim 18, wherein the first connection portion (121) comprises a flexible material.

20. The foldable electronic device protection housing (100) according to claim 19, wherein a material of the first connection portion (121) comprises leather.

21. The foldable electronic device protection housing (100) according to any one of claims 17 to 20, further comprising a second magnetic attraction member (142), wherein the second magnetic attraction member (142) is connected to the window portion (125), and the second magnetic attraction member (142) is attracted to a third magnetic attraction member (205) of the foldable electronic device (200).

22. The foldable electronic device protection housing (100) according to any one of claims 1 to 21, wherein the flexible display protection structure (120) further comprises:
a buffering portion (123), connected to the protection portion (122), wherein when the protection portion (122) is attached to at least a part of the flexible display (201a) in the outward-folding area, the buffering portion (123) is located between the flexible display (201a) in the outward-folding area and the protection portion (122).

23. A foldable electronic device assembly (300), comprising:
a foldable electronic device (200), wherein the foldable electronic device (200) comprises a housing (210) and a flexible display (201), and the flexible display (201) is connected to the housing (210); the housing (210) comprises a first housing (211) and a second housing (212), and the first housing (211) is rotatably connected to the second housing (212) through a first hinge (202); the first housing (211) and the second housing (212) are folded relative to each other away from the flexible display (201), or the first housing (211) and the second housing (212) are unfolded relative to each other; and when the first housing (211) and the second housing (212) are folded relative to each other, a flexible display (201a) in an outward-folding area is exposed from the first housing (211) and the second housing (212); and
the foldable electronic device protection housing (100) according to any one of claims 1 to 22, wherein the protection housing body (110) of the foldable electronic device protection housing (100) is clamped to the housing (210), and when the first housing (211) and the second housing (212) are folded relative to each other, the protection portion (122) of the foldable electronic device protection housing (100) is attached to at least a part of the flexible display (201a) in the outward-folding area.
